(19) Europäisches Patentamt
European Patent Office
Office européen des brevets

(11) **EP 4 782 889 A1**

(12) **EUROPEAN PATENT APPLICATION**

(43) Date of publication:
**29.07.2026 Bulletin 2026/31**

(21) Application number: **25154421.9**

(22) Date of filing: **28.01.2025**

(51) International Patent Classification (IPC):
**G02B 1/113** $^{(2015.01)}$ **G02C 7/02** $^{(2006.01)}$
**G02C 7/10** $^{(2006.01)}$ **G02B 1/118** $^{(2015.01)}$

(52) Cooperative Patent Classification (CPC):
**G02B 1/113; G02B 1/118; G02C 7/02;**
G02B 2207/107; G02C 7/12

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Carl Zeiss Vision International GmbH 73430 Aalen (DE)**

(72) Inventor: **von Blanckenhagen, Bernhard 73430 Aalen (DE)**

(74) Representative: **Carl Zeiss AG - Patentabteilung Carl-Zeiss-Straße 22 73447 Oberkochen (DE)**

(54) **SPECTACLE LENS WITH ANTI-REFLECTIVE COATING**

(57)      The present invention relates to a spectacle lens comprising an anti-reflective coating, said anti-reflective coating being a single layer anti-reflective coating, said spectacle lens having a spectral reflectance of < 1.5% at an angle of incidence of 0° in a wavelength interval of from a wavelength $\lambda_1$ to a wavelength $\lambda_2$, the spectacle lens being characterized in that
said wavelength interval of from said wavelength $\lambda_1$ to said wavelength $\lambda_2$ extends over one of the following widths w, w = $\lambda_2 - \lambda_1$,
- a width of at least 1200 nm,
- a width of at least 1300 nm,
- a width of at least 1400 nm,

with 380 nm $\leq \lambda_1, \lambda_2 \leq$ 2500 nm, $\lambda_1 \neq \lambda_2$, $\lambda_2 > \lambda_1$.

Figure 1

EP 4 782 889 A1

**Description**

Field of the invention

The present invention relates to a spectacle lens according to the preamble of claim 1, a method for manufacturing a spectacle lens according to the preamble of claim 10.

Related prior art

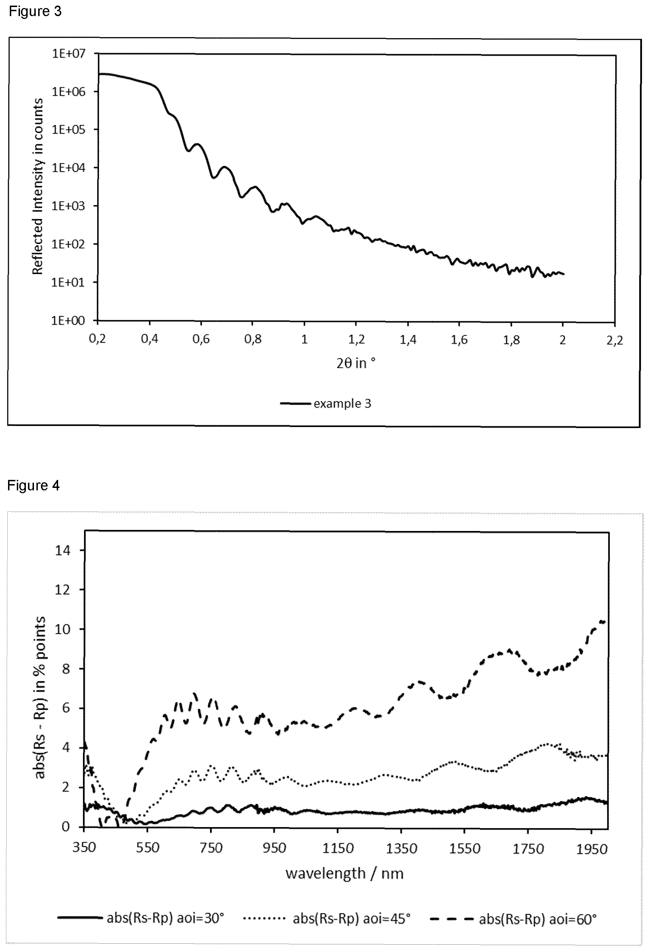

M. K. Omrani et al., Wide-angle broadband antireflection coatings based on boomerang-like alumina nanostructures in visible region, Scientific Reports (2022) 12:904,
**[0003]** https://www.nature.com/articles/s41598-022-04928-2, disclose in Figure 4c a reflectance and a transmittance across a boomerang-like alumina coated lens surface measured under light at normal incidence. In a wavelength range of 400 nm to 1500 nm, the average reflectance is given with $R_{ave}$ = 0.526%. The coating was deposited on BK7 glass via dip coating in an ambient atmosphere, heat treated at 400°C for 30 min to get a porous $Al_2O_3$ film, immersed in hot water for 60 min and, after drying in ambient atmosphere, heat-treated again at 400°C for 30 min. Among the disclosed coating thicknesses of 150 nm, 200 nm and 300 nm, the coating thickness of 200 nm was found to have the best optical performance with the least amount of reflectance, as shown in Figure 3b.
US 11,714,212 B2 discloses in Figure 10 an aluminium oxide nanostructure formed on a substrate. The reflection thereof between 400 nm and 750 nm is for 0°, 10°, 20° and 30° angle of incidence below 0.4%, as shown in Figure 12. The aluminium oxide nanostructure is formed by depositing a layer of aluminium oxide by either PVD or ALD and placing the structure in heated DI water for a predetermined time period.

Problem to be solved

Departing from M. K. Omrani et al., Wide-angle broadband antireflection coatings based on boomerang-like alumina nanostructures in visible region, Scientific Reports (2022) 12:904, https://www.nature.com/articles/s41598-022-04928-2, disclosing a heat treatment at 400°C for 30 minutes of a coating to result in an anti-reflective coating providing in a wavelength range of 400 nm to 1500 nm an average reflectance of $R_{ave}$ = 0.526%, the problem to be solved is to provide a method avoiding said heat treatment at 400°C. Further, the problem to be solved is to provide a spectacle lens allowing eye tracking.

Summary of the invention

The problem has been solved by the spectacle lens according to claim 1 and the method for manufacturing a spectacle lens according to claim 10.
The spectacle lens comprises an anti-reflective coating, said anti-reflective coating being a single layer anti-reflective coating, said spectacle lens having a spectral reflectance of < 1.5% at an angle of incidence of 0° in a wavelength interval of from a wavelength $\lambda_1$ to a wavelength $\lambda_2$, and is characterized in that said wavelength interval of from said wavelength $\lambda_1$ to said wavelength $\lambda_2$ extends over one of the following widths w, w = $\lambda_2 - \lambda_1$,

- a width of at least 1200 nm,
- a width of at least 1300 nm,
- a width of at least 1400 nm,

with 380 nm ≤ $\lambda_1$, $\lambda_2$ ≤ 2500 nm, $\lambda_1 \neq \lambda_2$, $\lambda_2 > \lambda_1$.
A "spectacle lens" is as defined in ISO 13666:2019(E), entry 3.5.2, an ophthalmic lens (3.5.1) worn in front of, but not in contact with, an eyeball. The spectacle lens preferably is a finished spectacle lens, the finished spectacle lens as defined in ISO 13666:2019(E), entry 3.8.7. Further, the spectacle lens may be used, for example as a pair of spectacle lenses, preferably calculated to provide an ordered power to a spectacle lens wearer, in a spectacle lens frame to be worn by the spectacle lens wearer or as individual framed or edged spectacle lenses which can be used as optical inserts in an AR (augmented reality) / VR (virtual reality) device. These optical inserts preferably are calculated to provide the ordered power to the spectacle lens wearer. In the direction of an eye of a wearer of the AR/VR device, an optical insert typically is positioned in-between the outermost surface of the AR/VR device and the eye of the wearer of the AR/VR device. The ordered power is as defined in ISO 13666:2019(E), entry 3.10.14.
An "anti-reflective coating" is as defined in ISO 13666:2019(E), entry 3.18.3, a coating on a surface of the spectacle lens (3.5.2) intended to reduce light (3.1.2) reflected from its surface. A surface of the spectacle lens is at least one of a front surface and a back surface of the spectacle lens, the front surface as defined in ISO 13666:2019(E), entry 3.2.13, the back surface as defined in ISO 13666:2019(E), entry 3.2.14.

A "single layer" anti-reflective coating is a single layer acting as anti-reflective coating, i.e., a single coating on the surface of the spectacle lens intended to reduce light reflected from said surface. Preferably, said single layer anti-reflective coating is a structured single layer anti-reflective coating. In scanning electron microscope (SEM) images, said single layer anti-reflective coating shows a porous structure comprising a plurality of pores in non-periodic arrangement. Each pore of said plurality of pores has a boundary. The boundary of each pore of the plurality of pores does not match the boundary of any other pore of the plurality of pores. From these SEM images, said porous structure of said single layer anti-reflective coating may be characterized as a sponge-like structure as said porous structure gives an impression of replicating a morphology of a natural sponge but in dimensions of the nano scale. Subjecting a respective SEM image a Fast Fourier Transform (FFT) pattern analysis, in particular a two-dimensional discrete Fourier Transformation pattern analysis, results in an image showing a bright central circular spot, a radius of said circular spot is attributed to a diameter of a respective pore of the plurality of pores. Analysing in said SEM image several pores of the plurality of pores by FFT pattern analysis results in diameters of respective pores ranging from 30 nm to 50 nm. The SEM images were preferably captured with the scanning electron microscope ZEISS Auriga 40, Carl Zeiss Microscopy GmbH, Germany, equipped with the Oxford Instruments Ultim Max 40, Oxford Instruments plc, UK, energy-dispersive X-ray spectroscopy (EDS) detector. The conditions preferably selected for obtaining the SEM images showing the sponge-like structure are: acceleration voltage: 1.2 kV; aperture: 30 $\mu$m; working distance 5.2 mm; pixel size 4.47 nm; detector: secondary electron detector; observation from top. For FFT pattern analysis, in particular the two-dimensional discrete Fourier Transformation pattern analysis, preferably SEM images in 10 kx or 25 kx magnification were used, using the SmartSEM Version 6.0 software, Carl Zeiss Microscopy GmbH, Germany. Alternatively or additionally to the before describe FFT pattern analysis of the plurality of pores in SEM images, the structured single layer anti-reflective coating may be characterized in terms of surface roughness by X-ray reflectometry (XRR), preferably using the device D8 Advance, Bruker Corporation, USA. A surface of the porous structure of the single layer anti-reflective coating diffusely scatters part of incoming X-ray radiation and reduces reflected intensity of the x-ray radiation, whereby values for the surface roughness selected from one of the following ranges are obtained: a range of from 1.6 nm to 3.0 nm, a range of from 1.8 nm to 2.8, a range of from 2.0 nm to 2.6 nm.

Preferably, said single layer anti-reflective coating is a single layer of aluminium oxide, preferably having said sponge-like structure. Preferably, thereby the term aluminium oxide, although only used as such henceforth, is not restricted to aluminium oxide ($Al_2O_3$) itself but comprises an aluminium oxide hydroxide ($AlO_x(OH)_{3-2x}$ (0<x<1)), for example in form of boehmite (AlOOH) or in form of gibbsite ($Al(OH)_3$) but also none crystalline forms of aluminium oxide hydroxide ($AlO_x(OH)_{3-2x}$ (0<x<1)).

A "spectral reflectance" is defined analogously as in ISO 13666:2019(E), entry 3.17.15, as ratio of a spectral radiant or luminous flux reflected by the surface of the spectacle lens comprising the anti-reflective coating to an incident spectral radiant or luminous flux at any specified wavelength, $\lambda$, for a specified angle of incidence. As in note 1 to entry 3.17.15 of ISO 13666:2019(E) the value stated for the spectral reflectance is that for a single surface. Preferably, the spectral reflectance of one surface of the spectacle lens is measured by using a LAMBDA 950 S UV/Vis/NIR spectrophotometer, PerkinElmer Waltham, USA., equipped with the Universal Reflectance Accessory, PerkinElmer Waltham, USA, to measure at different angles of incidence.

The smallest angle of incidence accessible with this spectrophotometer is 8° which is assumed to be close enough to 0° angle of incidence to neglect effects of polarization. The measurement at angles of incidence of 8° is often referred to as near-normal angle of incidence spectral reflectance measurement and represents well a measurement of the spectral reflectance at 0° angle of incidence. For spectral reflectance measurements at angles of incidence $\geq$ 30° the spectral reflectance of s-polarized and p-polarized light are measured separately by activating the use of a linear polariser during a respective measurement. For example, in a first measurement, the spectral reflectance of s-polarized light is recorded, in a second measurement, the spectral reflectance of p-polarized light is recorded. The spectral reflectance of unpolarized light is then calculated using the equation $R_a = \frac{R_s + R_p}{2}$.

The spectral reflectance at 0° angle of incidence of one surface of the spectacle lens may alternatively be measured with the Instrument F10-AR, Filmetrics, USA.

An "angle of incidence" is an angle between a ray of light incident on the surface and a line perpendicular to said surface at a point of incidence. For example, if the incident light on the surface is represented by a plane wave the ray of light is in a direction of a wave vector of said plane wave.

A "wavelength interval" is limited by a wavelength $\lambda_1$ and a wavelength $\lambda_2$, whereby the wavelength $\lambda_2$ is larger than the wavelength $\lambda_1$. The wavelength $\lambda_1$ is equal to or larger than 380 nm. The wavelength $\lambda_2$ is smaller than or equal to 2500 nm. Preferably, the wavelength $\lambda_1$ is equal to or larger than a cut-off wavelength $\lambda_c$ of the spectacle lens. The cut-off wavelength $\lambda_c$ of the spectacle lens is a wavelength at which a spectral transmittance of the spectacle lens starts being continuously equal to or smaller than 1%, the spectral transmittance as defined in ISO 13666:2019(E), entry 3.17.1. In other words, the cut-off wavelength $\lambda_c$ of the spectacle lens is the wavelength at which the spectral transmittance of an uncoated spectacle lens starts being continuously equal to or smaller than 1%.

A "width" w is a difference in wavelength, said difference in wavelength being between wavelengths, a wavelength $\lambda_2$ minus a wavelength $\lambda_1$, with $\lambda_2 > \lambda_1$. The wavelengths $\lambda_1$ and $\lambda_2$ are selected from the wavelength interval with $\lambda_1$ being equal to or larger than 380 nm and $\lambda_2$ being smaller than or equal to 2500 nm. Preferably, the wavelength $\lambda_1$ is equal to or larger than the cut-off wavelength $\lambda_c$ of the spectacle lens and the wavelength $\lambda_2$ is smaller than or equal to 2500 nm.

In other words, the width w is the difference between the wavelength $\lambda_2$ minus the wavelength $\lambda_1$: w = $\lambda_2$ - $\lambda_1$, with $\lambda_2 > \lambda_1$, $\lambda_1 \neq \lambda_2$, 380 nm $\leq \lambda_1, \lambda_2 \leq$ 2500 nm. Preferably, the width w is the difference between the wavelength $\lambda_2$ minus the wavelength $\lambda_1$: w = $\lambda_2$ - $\lambda_1$, with $\lambda_2 > \lambda_1$, $\lambda_1 \neq \lambda_2$, $\lambda_c \leq \lambda_1, \lambda_2 \leq$ 2500 nm.

The width w = $\lambda_2$ - $\lambda_1$, with $\lambda_2 > \lambda_1$, $\lambda_1 \neq \lambda_2$, 380 nm $\leq \lambda_1, \lambda_2 \leq$ 2500 nm, in which the spectacle lens has the spectral reflectance of < 1.5% at an angle of incidence of 0° is selected from one of the following width: the width being at least 1200 nm, the width being at least 1300 nm, the width being at least 1400 nm. As the width is within the wavelength range of from 380 nm to 2500 nm, an upper limit of the width preferably does not exceed the width of the difference 2500 nm minus 380 nm, i.e. 2120 nm. Preferably, the width w = $\lambda_2$ - $\lambda_1$, with $\lambda_2 > \lambda_1$, $\lambda_1 \neq \lambda_2$, $\lambda_c \leq \lambda_1, \lambda_2 \leq$ 2500 nm, in which the spectacle lens has the spectral reflectance of < 1.5% at an angle of incidence of 0° is selected from one of the following width: the width being at least 1200 nm, the width being at least 1300 nm, the width being at least 1400 nm. Again, as the width is within the wavelength interval of from the cut-off wavelength $\lambda_c$ of the spectacle lens to 2500 nm, an upper limit of the width preferably does not exceed the width of the difference 2500 nm minus the cut-off wavelength $\lambda_c$ of the spectacle lens. For example, if the cut-off wavelength $\lambda_c$ of the spectacle lens is 400 nm ($\lambda_c$ = 400 nm), the width w = $\lambda_2$ - $\lambda_1$, with $\lambda_2 > \lambda_1$, $\lambda_1 \neq \lambda_2$, $\lambda_c \leq \lambda_1, \lambda_2 \leq$ 2500 nm, does not exceed 2100 nm.

Preferably, an optical loss L of spectacle lens comprising the single layer anti-reflective coating is below 2%. The optical loss is an amount of light that is not transmitted or reflected when light passes through the spectacle lens comprising the single layer anti-reflective coating. The optical loss is calculated with the following equation: $L(\lambda_i) = 100\% - R_d(\lambda_i) - T(\lambda_i)$. With $R_d(\lambda_i)$ being the double side spectral reflectance at the wavelength $\lambda_i$ and $T(\lambda_i)$ being the spectral transmittance at the wavelength $\lambda_i$. The double side spectral reflectance and the spectral transmittance used for calculating the optical loss, preferably is measured using a spectrometer UltraScan PRO, Hunter Associates Laboratory, Inc., USA. The optical loss in general is a result of two effects: absorption of light A and scattering of light S: L=A+S. To decide if the optical loss calculated is a result of absorption of the spectacle lens comprising the single layer anti-reflective coating or light scattering, the haze H of the spectacle lens comprising the single layer anti-reflective coating is measured, preferably using the spectrometer UltraScan PRO. The haze H is a good approximation for an amount of scattered light S. For the visible wavelength range, i.e. from 380 nm to 780 nm, an integrated value of haze is preferably below 1%. From that the absorption A introduced to the spectacle lens coated on both surfaces with the anti-reflective coating can estimated to be around 1%.

The lower the optical loss of the spectacle lens coated with the single layer anti-reflection coating the more light is transmitted through the spectacle lens. A high spectral transmittance of the spectacle lens coated with the single layer anti-reflection coating results in more light arriving at the eye of the spectacle lens wearer or at an electrooptical sensor. A haze value H below 1% has the advantage that visual perception is not disturbed by the haze when the spectacle lens wearer is looking through the spectacle lens coated with the single layer anti-reflection coating.

M. K. Omrani et al., Wide-angle broadband antireflection coatings based on boomerang-like alumina nanostructures in visible region, Scientific Reports (2022) 12:904, https://www.nature.com/articles/s41598-022-04928-2, describe the porous aluminium oxide film obtained by the method described therein as boomerang-like. US 11,714,212 B1 describe in column 20, lines 49 to 53, the nanostructure layer 914 as a "grass-like" or "flower-like" structure after aluminium oxide layer 2400 is placed in the heated DI water. The different characterization of the structure of the anti-reflective coatings, as boomerang-like in M. K. Omrani et al., as grass-like or as flower-like in US 11,714,212 B1, as sponge-like in the present case is assumed to be responsible for the different properties described with respect to each of the before-mentioned anti-reflective coatings. Apart from the different characterization of the structure of the anti-reflective coatings, US 11,714,212 B1 explicitly states in column 12, lines 46 to 56, with respect to figure 12, that "reduced thicknesses [...] generate a more v-like shape in the spectral performance curve." "A more v-like shape" indicates that both with respect to shorter wavelength and with respect to longer wavelength a reflection as shown in figure 12 of US 11,714,212 B1 increases, whereby no indication is provided that the reflection decreases again, so it is assumed that the reflection in particular in direction to longer wavelength increases and thus is not as low as in the wavelength range 400 nm to 750 nm that is shown in figure 12. In other words, the width in which the spectral reflectance is below 1.5% at an angle of incidence of 0° is 350 nm and thus significantly below the widths of 1200 nm, 1300 nm, and 1400 nm that are described before with respect to the "sponge-like" single layer anti-reflective coating. H A Macleod, Thin-Film Optical Filters, third edition, Institute of Physics Publishing Bristol and Philadelphia, ISBN 0 7503 0688 2, shows in Figure 3.18 a computed reflectance at various angles of incidence of a single surface of glass of index 1.52 coated with a single layer of magnesium fluoride of index 1.38 and optical thickness at normal incidence one quarter-wave at 600 nm. Using the disclosed data of before-mentioned Figure 3.18 to calculate the width, in which the glass coated with the single layer of magnesium fluoride has the spectral reflectance of < 1.5% at the angle of incidence of 0°, result in the width of 270 nm as difference between the wavelength $\lambda_2$ = 760 nm and the wavelength $\lambda_1$ = 490 nm. For calculating the width, the software OptiLayer, OptiLayer 64 for Windows, Version 14.57, OptiLayer GmbH, Germany, was used.

Further, H A Macleod discloses in Table 3.4 a four-layer anti-reflective coating on glass: glass/ $TiO_2$ (49.23 nm) / $MgF_2$ (35.06 nm+22.66 nm)/ $TiO_2$ (57.96 nm)/ $MgF_2$ (154.47 nm). Using the disclosed data of said four-layer anti-reflective coating on glass to calculate the width, in which the glass coated with the four-layer anti-reflective coating has the spectral reflectance of < 1.5% at the angle of incidence of 0°, result in the width of 325 nm as difference between the wavelength $\lambda_2$ = 720 nm and the wavelength $\lambda_1$ = 395 nm. For calculating the width, again the software Optilayer was used.

Also disclosed in said Table 3.4 of H A Macleod is a seven-layer anti-reflective coating on glass: glass / $MgF_2$ (294.54 nm)/ $TiO_2$ (39.99 nm)/ $MgF_2$ (44.31 nm)/ $TiO_2$ (240.84 nm)/ $MgF_2$ (17.46 nm)/ $TiO_2$ (50.70 nm)/ $MgF_2$ (140.80 nm). Using the disclosed data of said seven-layer anti-reflective coating on glass to calculate the width, in which the glass coated with the seven-layer anti-reflective coating has the spectral reflectance of < 1.5% at the angle of incidence of 0°, result in the width of 540 nm as difference between the wavelength $\lambda_2$ = 965 nm and the wavelength $\lambda_1$ = 425 nm. For calculating the width, again the software Optilayer was used.

As demonstrated by the before-mentioned anti-reflective coatings disclosed by Mcleod, an increasing number of layer results in an increasing width, in which the glass coated with the respective coating has the spectral reflectance of < 1.5% at the angle of incidence of 0°. Despite of this increase in layers, the width of at least 1200 nm, at least 1300 nm or at least 1400 nm, as described before with respect to the spectacle lens comprising the single layer anti-reflective coating, is not achieved, even not with the seven-layer anti-reflective coating described in Table 4.3 of Mcleod. The reason for the limitations in width of multilayer anti-reflective coatings is assumed to be due to general limitations of achieving multilayer anti-reflection coatings with a broad width, as described in A. V. Tikhonravov et al, Estimation of the average residual reflectance of broadband antireflection coatings, APPLIED OPTICS / Vol. 47, No. 13 /1 May 2008. The reason for the significant increase in the width, i.e. from 540 nm as largest width disclosed by Mcleod to at least 1200 nm as disclosed with respect to the single layer anti-reflective coating on the spectacle lens described before, is assumed to be due to the sponge-like porous structure of the single layer anti-reflective coating.

Frédéric Lemarquis, et al. Broadband antireflection coatings for visible and infrared ranges. CEAS Space Journal, 2019, 11 (4), pp.567-578. 10.1007/s12567- 019-00266-8. hal-02350435, describes an anti-reflective coating with 28 layers for a silica substrate. The spectral reflectance described for this silica substrate / 28-layer anti-reflective coating combination is < 1.5% at an angle of incidence of 0° and within a wavelength interval of from 400 nm to 1200 nm. In contrast to the silica substrate / 28-layer anti-reflective coating combination described by Frédéric Lemarquis, et al., the spectacle lens comprising the single layer anti-reflective coating has the same spectral reflectance of < 1.5% at the same angle of incidence of 0° but not only extending over the width of 800 nm (1200 nm minus 400 nm) but extending over one of the before-mentioned widths, i.e. the width being at least 1200 nm, at least 1300 nm, at least 1400 nm. Additionally, to the drastic reduction in layers, from 28 layers to the single layer, which goes along, for example, with a simplified manufacturing process, the single layer anti-reflective coating extends the width across which the spectral reflectance is < 1.5% at an angle of incidence of 0° further in direction of longer wavelength, i.e. in direction of infrared radiation. An extension in direction of infrared radiation is of decisive advantage for applications which combine the before-described spectacle lenses comprising the single layer anti-reflective coating with, for example, electrooptical sensors which work outside the wavelength range of human vision. For example, if an electrooptical sensor uses infrared radiation for detecting a viewing direction of a spectacle lens wearer through a spectacle lens comprising an anti-reflective coating, this anti-reflective coating should not reflect the infrared radiation used by the electrooptical sensor. Especially in AR/VR devices, electrooptical sensors are used, e.g. for eye tracking systems working in the infrared wavelength range to detect a gaze direction of a wearer of such an AR/VR device. Electrooptical sensors are sensors that convert light or change light into an electronic signal: e.g. cameras that work in the infrared spectral region.

Preferably, the spectacle lens comprising the anti-reflective coating, said anti-reflective coating being the single layer anti-reflective coating, the spectacle lens having the spectral reflectance of < 1.5% at the angle of incidence of 0° in the wavelength interval of from the wavelength $\lambda_1$ to the wavelength $\lambda_2$, is characterized in that the spectacle lens has the spectral reflectance for unpolarized light of < 2.1% at the angle of incidence of 45° in said wavelength interval, said spectral reflectance extending over one of the following width:

- a width of at least 800 nm,
- a width of at least 900 nm,
- a width of at least 1000 nm.

Compared to the glass coated with the single layer anti-reflective coating described in Figure 3.18 of H A Mcleod, the glass coated with the four-layer anti-reflective coating and glass coated with the seven-layer anti-reflective coating, both described in Table 3.4 of H A Mcleod, having a respective calculated width of 215 nm (as difference between the wavelength $\lambda_2$ = 640 nm and the wavelength $\lambda_1$ = 425 nm), a respective calculated width of 275 nm (as difference between

the wavelength $\lambda_2$ = 630 nm and the wavelength $\lambda_1$ = 355 nm), a respective calculated width of 505 nm (as difference between the wavelength $\lambda_2$ = 890 nm and the wavelength $\lambda_1$ = 385 nm), for which the glass coated with the respective anti-reflective coating has the spectral reflectance of < 2.1% for unpolarized light at the angle of incidence of 45°, the spectacle lens comprising the single layer anti-reflective coating described before shows a significantly increased width of at least 800 nm, at least 900 nm, at least 1000 nm. For calculation the respective widths of the glasses coated with the respective anti-reflective coatings of H A Mcleod, the software Optilayer was used. The significant increase in the width, in which the spectacle lens comprising the single layer anti-reflective coating has the spectral reflectance of < 2.1% for unpolarized light at the angle of incidence of 45°, is assumed to be due to the sponge-like porous structure of the single layer anti-reflective coating.

Apart from the fact that the broad width is achieved using the single layer anti-reflective coating, the before-mentioned width of at least 800 nm, at least 900 nm or at least 1000 nm, it is of advantage for applications which combine the before-described spectacle lenses comprising the single layer anti-reflective coating with, for example, electrooptical sensors which work outside the wavelength range of human vision. When using electrooptical sensors in combination with such spectacle lenses, it is of advantage that the aforementioned electrooptical sensors are placed not in the direct view of the spectacle lens wearer but rather outside the direct view resulting in the fact that an electrooptical sensor looks under angles of incidence larger than 0° on the spectacle lens and thus does not disturb the direct view of the spectacle lens wearer.

Preferably, the spectacle lens comprising the anti-reflective coating, said anti-reflective coating being the single layer anti-reflective coating, the spectacle lens having the spectral reflectance of < 1.5% at the angle of incidence of 0° in the wavelength interval of from the wavelength $\lambda_1$ to the wavelength $\lambda_2$, is characterized in that said spectacle lens has the spectral reflectance for unpolarized light of < 5% at the angle of incidence of 60° in said wavelength interval, said spectral reflectance extending over one of the following widths

- a width of at least 1100 nm,
- a width of at least 1200 nm,
- a width of at least 1300 nm.

Compared to the glass coated with the single layer anti-reflective coating described in Figure 3.18 of H A Mcleod, the glass coated with the four-layer anti-reflective coating and the glass coated with the seven-layer anti-reflective coating, both described in Table 3.4 of H A Mcleod, having a respective calculated width of 200 nm (as difference between the wavelength $\lambda_2$ = 580 nm and the wavelength $\lambda_1$ = 380 nm), a respective calculated width of 265 nm (as difference between the wavelength $\lambda_2$ = 590 nm and the wavelength $\lambda_1$ = 325 nm), a respective calculated width of 430 nm (as sum of the differences between the wavelength $\lambda_2$ = 860 nm and the wavelength $\lambda_1$ = 655 nm and the wavelength $\lambda_2'$ = 585 nm and the wavelength $\lambda_1'$ = 360 nm), for which the glass coated with the respective anti-reflective coating has the spectral reflectance of < 5% for unpolarized light at the angle of incidence of 60°, the spectacle lens comprising the single layer anti-reflective coating described before shows a significantly increased width of at least 1100 nm, at least 1200 nm, at least 1300 nm. For calculation the respective widths of the glasses coated with the respective anti-reflective coatings of H A Mcleod , the software Optilayer was used. This significant increase in the width, in which the spectacle lens comprising the single layer anti-reflective coating has the spectral reflectance of < 5% for unpolarized light at the angle of incidence of 60°, is assumed to be due to the sponge-like porous structure of the single layer anti-reflective coating.

Apart from the fact that the broad width is achieved using the single layer anti-reflective coating, the before-mentioned width of at least 1100 nm, at least 1200 nm or at least 1300 nm, it is of advantage for applications which combine the before-described spectacle lenses comprising the single layer anti-reflective coating with, for example, electrooptical sensors which work outside the wavelength range of human vision. When using electrooptical sensors in combination with such spectacle lenses, it is of advantage that the aforementioned electrooptical sensors are placed not in the direct view of the spectacle lens wearer but rather outside the direct view resulting in the fact that the electrooptical sensor looks under angles of incidence larger than 0° on the spectacle lens. In this regard an angle of incidence of 60° is even more advantageous than an angle of incidence of 45°, allowing the spectacle lens wearer a larger visual field that is not disturbed by the electrooptical sensor.

Preferably, the spectacle lens comprising the anti-reflective coating, said anti-reflective coating being the single layer anti-reflective coating, said spectacle lens having the spectral reflectance of <1.5% at the angle of incidence of 0° in the wavelength interval of from the wavelength $\lambda_1$ to the wavelength $\lambda_2$, is characterized in that said spectacle lens has

- an average spectral reflectance for unpolarized light of smaller than or equal to 20% at the angle of incidence of 75° in the wavelength interval of from the wavelength $\lambda_1$ = 380 nm to the wavelength $\lambda_2$ = 1200 nm and,
- an average spectral reflectance for unpolarized light of smaller than or equal to 21% at the angle of incidence of 75° in the wavelength interval of from the wavelength $\lambda_1$ = 380 nm to the wavelength $\lambda_2$ = 1400 nm and,
- an average spectral reflectance for unpolarized light of smaller than or equal to 21% at the angle of incidence of 75° in the wavelength interval of from the wavelength $\lambda_1 = 380$ nm to the wavelength $\lambda_2 = 1600$ nm.

The average spectral reflectance of the spectacle lens is calculated for unpolarized light at the angle of incidence of 75° in the wavelength interval, in particular in the wavelength interval of from 380 nm to 1200 nm, the wavelength interval of from 380 nm to 1400 nm and the wavelength interval of from 380 nm to 1600 nm, according to

$$average\ spectral\ reflectance\ \langle R_a(\lambda)\rangle[\lambda_1,\lambda_2] = \frac{1}{n}\sum_{i=0}^{n-1} R_a(\lambda_i)\ ,$$

with $R_a$ being the spectral reflectance for unpolarized light. The relationship between $R_a$ and the spectral reflectance for s-polarized light $R_s$ and the spectral reflectance for p-polarized light $R_p$ is

$$R_a = \frac{R_s + R_p}{2}.$$

In the formula given before for the average spectral reflectance, $[\lambda_1, \lambda_2]$ denotes the wavelength interval with the wavelength $\lambda_1$ being 380 nm and the wavelength $\lambda_2$ being 1200 nm, 1400 or 1600 nm.

Preferably, the average spectral reflectance of the spectacle lens is, for unpolarized light at the angle of incidence of 75°, in the wavelength interval of from the wavelength $\lambda_1 = 380$ nm to the wavelength $\lambda_2 = 1200$ nm, i.e. in the wavelength interval of from 380 nm to 1200 nm, smaller than or equal to one of the following values: 19%, 18%, 17%, 16%. Preferably, the average spectral reflectance of the spectacle lens is, for unpolarized light at the angle of incidence of 75°, in the wavelength interval of from 380 nm to 1200 nm, in one of the following ranges: a range of from 14% to 20%, a range of from 14.5% to 18%, a range of from 15% to 17%.

Preferably, the average spectral reflectance of the spectacle lens is, for unpolarized light at the angle of incidence of 75°, in the wavelength interval of from the wavelength $\lambda_1 = 380$ nm to the wavelength $\lambda_2 = 1400$ nm, i.e. in the wavelength interval of from 380 nm to 1400 nm, smaller than or equal to one of the following values: 20%, 19%, 18%, 17%. Preferably, the average spectral reflectance of the spectacle lens is, for unpolarized light at the angle of incidence of 75°, in the wavelength interval of from 380 nm to 1400 nm, in one of the following ranges: a range of from 14% to 21%, a range of from 14.5% to 19%, a range of from 15% to 17%.

Preferably, the average spectral reflectance of the spectacle lens is, for unpolarized light at the angle of incidence of 75°, in the wavelength interval of from the wavelength $\lambda_1 = 380$ nm to the wavelength $\lambda_2 = 1600$ nm, i.e. in the wavelength interval of from 380 nm to 1600 nm, smaller than or equal to one of the following values: 20%, 19%, 18%, 17%. Preferably, the average spectral reflectance of the spectacle lens is, for unpolarized light at the angle of incidence of 75°, in the wavelength interval of from 380 nm to 1400 nm, in one of the following ranges: a range of from 14% to 21%, a range of from 14.5% to 19%, a range of from 15% to 17%.

The spectral reflectance at angle of incidence of 75° was measured using a DUV-VASE ellipsometer, J.A.Woollam Company, Lincoln NE, USA.

The DUV-VASE ellipsometer offers a mode to measure the spectral reflectance of polarized light under oblique angles of incidence. For example, in a first measurement, the spectral reflectance of s-polarized light is recorded at an angle of incidence of 75°, in a second measurement, the spectral reflectance of p-polarized light is recorded at an angle of incidence of 75°. The spectral reflectance of unpolarized light is then calculated using the equation $R_a = \frac{R_s + R_p}{2}$.

The glass coated with the single layer anti-reflective coating described in Figure 3.18 of H A Mcleod, the glass coated with the four-layer anti-reflective coating and the glass coated with the seven-layer anti-reflective coating, both described in Table 3.4 of H A Mcleod, has a respective calculated average spectral reflectance, for unpolarized light at the angle of incidence of 75°, in the wavelength interval of from the wavelength $\lambda_1 = 380$ nm to the wavelength $\lambda_2 = 1200$ nm, i.e. in the wavelength interval of from 380 nm to 1200 nm, of 21.9%, 26.0% and 24.3%.

The glass coated with the single layer anti-reflective coating described in Figure 3.18 of H A Mcleod, the glass coated with the four-layer anti-reflective coating and the glass coated with the seven-layer anti-reflective coating, both described in Table 3.4 of H A Mcleod, has a respective calculated average spectral reflectance, for unpolarized light at the angle of incidence of 75°, in the wavelength interval of from the wavelength $\lambda_1 = 380$ nm to the wavelength $\lambda_2 = 1400$ nm, i.e. in the wavelength interval of from 380 nm to 1400 nm, of 22.3%, 26.6% and 26.9%.

The glass coated with the single layer anti-reflective coating described in Figure 3.18 of H A Mcleod, the glass coated with the four-layer anti-reflective coating and the glass coated with the seven-layer anti-reflective coating, both described in Table 3.4 of H A Mcleod, has a respective calculated average spectral reflectance, for unpolarized light at the angle of incidence of 75°, in the wavelength interval of from the wavelength $\lambda_1 = 380$ nm to the wavelength $\lambda_2 = 1600$ nm, i.e. in the wavelength interval of from 380 nm to 1600 nm, of 22.7%, 27.1% and 28.6%.

For calculation the respective average spectral reflectances of the glasses coated with the respective anti-reflective coatings of H A Mcleod, the software Optilayer was used. Compared to the calculated average spectral reflectances for the glasses coated with the respective anti-reflective coatings of H A Mcleod, the average spectral reflectance of the spectacle lens comprising the single layer anti-reflective coating is lower for each before-mentioned wavelength interval. The lower average spectral reflectance is assumed to be due to the sponge-like porous structure of the single layer anti-reflective coating.

Apart from the fact that the average spectral reflectance of the spectacle lens is low over a broad wavelength interval by using the single layer anti-reflective coating, it is of advantage for applications which combine the before-described spectacle lenses comprising the single layer anti-reflective coating with, for example, electrooptical sensors which work outside the wavelength range of human vision. It is of advantage that the aforementioned electrooptical sensors are placed not in the direct view of the spectacle lens wearer but rather outside the direct view resulting in the fact that the electrooptical sensor looks under angles of incidence larger than 0° on the spectacle lens. In this regard the angle of incidence of 75° is even more advantageous than the angle of incidence of 60°. The higher the angle of incidence the wider the undisturbed field of view for the spectacle lens wearer. The higher the angle of incidence is, the electrooptical sensor can be positioned further outside the field of view for the spectacle lens wearer while still being able to detect, for example, the gaze direction of the eye of the spectacle lens wearer.

Preferably, the spectacle lens comprising the anti-reflective coating, said anti-reflective coating being the single layer anti-reflective coating, said spectacle lens having the spectral reflectance of <1.5% at the angle of incidence of 0° in the wavelength interval of from the wavelength $\lambda_1$ to the wavelength $\lambda_2$, is characterized in that said spectacle lens has

- a two-dimensional average spectral reflectance for unpolarized light of smaller than or equal to 3.0% in said wavelength interval of from the wavelength $\lambda_1$ = 380 nm to the wavelength $\lambda_2$ = 1200 nm and in an interval of angles of incidence of from 0° to 60°,
- a two-dimensional average spectral reflectance for unpolarized light of smaller than or equal to 3.5% in said wavelength interval of from the wavelength $\lambda_1$ = 380 nm to the wavelength $\lambda_2$ = 1400 nm and in an interval of angles of incidence of from 0° to 60°,
- a two-dimensional average spectral reflectance for unpolarized light of smaller than or equal to 4.0% in said wavelength interval of from the wavelength $\lambda_1$ = 380 nm to the wavelength $\lambda_2$ = 1600 nm and in an interval of angles of incidence of from 0° to 60°.

An "angle of incidence interval" is limited by an angle of incidence $\theta_1$ and an angle of incidence $\theta_2$, whereby the angle of incidence $\theta_2$ is larger than the angle of incidence $\theta_1$. With respect to the before-mentioned two-dimensional average spectral reflectance, the interval of angles of incidence has the angle of incidence $\theta_1$ = 0° and the angle of incidence $\theta_2$ = 60°.

A two-dimensional average of a is the average of a function f over a two-dimensional grid of discrete variables $x_i$ and $y_j$:

$$\langle f(x,y)\rangle [x_0, x_{n-1}] \times [y_0, y_{m-1}] = \frac{1}{n \cdot m} \sum_{i=0}^{n-1} \sum_{j=0}^{m-1} f(x_i, y_j)$$

with $[x_0, x_{n-1}]$ being the interval of the variable x and $[y_0, y_{m-1}]$ being the interval of the variable y out of which the discrete values of the variables x and y are chosen. The notation $[x_0, x_{n-1}] \times [y_0, y_{m-1}]$ indicates that average is taken over a grid spanned by discrete values of the two variables x and y. The notation $\langle f(x,y)\rangle$ indicates the average of the function f over the two-dimensional grid of the discrete variables $x_i$ and $y_j$.

The two-dimensional average spectral reflectance of the spectacle lens is calculated for unpolarized light in an interval of angles of incidence and in the wavelength interval. This means the average spectral reflectance is calculated for unpolarized light dependent on the two dimensions interval of angles of incidence as one dimension thereof and the wavelength interval as the other dimension thereof. The two-dimensional average spectral reflectance of the spectacle lens is calculated for unpolarized light in the interval of angles of incidence of from 0° to 60° and in the wavelength interval, in particular in the wavelength interval of from 380 nm to 1200 nm, the wavelength interval of from 380 nm to 1400 nm and the wavelength interval of from 380 nm to 1600 nm, according to

$$two-dimensional\ average\ spectral\ reflectance\ \langle R_a(\lambda, \theta)\rangle [\lambda_1, \lambda_2] \times [\theta_1, \theta_2] = \frac{1}{m \cdot n} \sum_{i=0}^{n-1} \sum_{j=0}^{m-1} R_a(\lambda_i, \theta_j)$$

In the formula given before for the two-dimensional average spectral reflectance, $[\lambda_1, \lambda_2]$ denotes the wavelength interval with the wavelength $\lambda_1$ being 380 nm and the wavelength $\lambda_2$ being 1200 nm, 1400 nm or 1600 nm, and $[\theta_1, \theta_2]$

denotes the angle of incidence interval with $\theta_1 = 0°$ and $\theta_2 = 60°$.

Preferably, the two-dimensional average spectral reflectance of the spectacle lens is, for unpolarized light in the interval of angles of incidence of from 0° to 60°, in the wavelength interval in the wavelength interval of from the wavelength $\lambda_1 = 380$ nm to the wavelength $\lambda_2 = 1200$ nm, i.e. in the wavelength interval of from 380 nm to 1200 nm, smaller than or equal to one of the following values: 2.8%, 2.6%, 2.4%, 2.2%. Preferably, the two-dimensional average spectral reflectance of the spectacle lens is, for unpolarized light in the interval of angles of incidence of from 0° to 60°, in the wavelength interval of from 380 nm to 1200 nm, in one of the following ranges: a range of from 1.5% to 3.0%, a range of from 1.6% to 2.8%, a range of from 1.8% to 2.6%.

Preferably, the two-dimensional average spectral reflectance of the spectacle lens is, for unpolarized light in the interval of angles of incidence of from 0° to 60°, in the wavelength interval in the wavelength interval of from the wavelength $\lambda_1 = 380$ nm to the wavelength $\lambda_2 = 1400$ nm, i.e. in the wavelength interval of from 380 nm to 1400 nm, smaller than or equal to one of the following values: 3.3%, 3.0%, 2.6%, 2.4%. Preferably, the two-dimensional average spectral reflectance of the spectacle lens is, for unpolarized light in the interval of angles of incidence of from 0° to 60°, in the wavelength interval of from 380 nm to 1400 nm, in one of the following ranges: a range of from 1.5% to 3.5%, a range of from 1.6% to 3.0%, a range of from 1.8% to 2.8%.

Preferably, the two-dimensional average spectral reflectance of the spectacle lens is, for unpolarized light in the interval of angles of incidence of from 0° to 60°, in the wavelength interval in the wavelength interval of from the wavelength $\lambda_1 = 380$ nm to the wavelength $\lambda_2 = 1600$ nm, i.e. in the wavelength interval of from 380 nm to 1600 nm, smaller than or equal to one of the following values: 3.8%, 3.5%, 3.0%, 2.8%. Preferably, the two-dimensional average spectral reflectance of the spectacle lens is, for unpolarized light in the interval of angles of incidence of from 0° to 60°, in the wavelength interval of from 380 nm to 1600 nm, in one of the following ranges: a range of from 1.5% to 4.0%, a range of from 1.6% to 3.0%, a range of from 1.8% to 2.8%.

Preferably, the two-dimensional average spectral reflectance for unpolarized light is calculated based on the following measurements using the LAMBDA 950 S UV/Vis/NIR spectrophotometer: In a first measurement, the spectral reflectance for unpolarized light in the wavelength interval of from the wavelength $\lambda_1$ to the wavelength $\lambda_2$ is measured at an angle of incidence of 8°. In a second measurement, the spectral reflectance for s-polarized light and for p-polarized light is measured in the wavelength interval of from the wavelength $\lambda_1$ to the wavelength $\lambda_2$ at the angle of incidence of 30°. A corresponding spectral reflectance for unpolarized light at the angle of incidence of 30° is calculated for each wavelength in said wavelength interval by the above-mentioned formula for $R_a$: $R_a = \frac{R_s + R_p}{2}$. In a third measurement, the spectral reflectance for s-polarized light and for p-polarized light is measured in the wavelength interval of from the wavelength $\lambda_1$ to the wavelength $\lambda_2$ at the angle of incidence of 45°. A corresponding spectral reflectance for unpolarized light at the angle of incidence of 45° is calculated for each wavelength in said wavelength interval by the above-mentioned formula for $R_a$. In a fourth measurement, the spectral reflectance for s-polarized light and for p-polarized light is measured in the wavelength interval of from the wavelength $\lambda_1$ to the wavelength $\lambda_2$ at the angle of incidence of 60°. A corresponding spectral reflectance for unpolarized light at the angle of incidence of 60° is calculated for each wavelength in said wavelength interval by the above-mentioned formula for $R_a$. A respective corresponding spectral reflectance for unpolarized light at a respective angle of incidence is used to calculate the two-dimensional average spectral reflectance according to

$$two-dimensional\ average\ spectral\ reflectance\ \langle R_a(\lambda,\theta)\rangle[\lambda_1,\lambda_2] \times [\theta_1,\theta_2] = \frac{1}{m \cdot n}\sum_{i=0}^{n-1}\sum_{j=0}^{m-1} R_a(\lambda_i,\theta_j)$$

as mentioned before.

This is of advantage for applications which combine the before-described spectacle lenses comprising the single layer anti-reflective coating with, for example, electrooptical sensors which work outside the wavelength range of human vision. It is of advantage that the aforementioned electrooptical sensors are placed not in the direct view of the spectacle lens wearer but rather outside the direct view resulting in the fact that the electrooptical sensor looks under angles on incidence larger than 0° on the spectacle lens. For such configurations it is advantageous that a maximum intensity of light in the wavelength interval relevant for the electrooptical detector passes through the spectacle lens as well that a maximum intensity of light reaches the eye from other directions than the direct viewing direction of the detector. The aforementioned average values ensures that a maximum of light intensity coming from different directions and from different wavelengths can reach the eye or the electrooptical sensor.

Preferably, the spectacle lens comprising the anti-reflective coating, said anti-reflective coating being the single layer anti-reflective coating, said spectacle lens having the spectral reflectance of <1.5% at the angle of incidence of 0° in the wavelength interval of from the wavelength $\lambda_1$ to the wavelength $\lambda_2$, is characterized in that said spectacle lens has

-    a two-dimensional average of an absolute value of polarization splitting of smaller than or equal to 4.0 percentage points in the wavelength interval of from the wavelength $\lambda_1 = 380$ nm to the wavelength $\lambda_2 = 1200$ nm and in the interval of angles of incidence of from 30° to 60°,

- a two-dimensional average of an absolute value of polarization splitting of smaller than or equal to 6.0 percentage points in the wavelength interval of from the wavelength $\lambda1 = 380$ nm to the wavelength $\lambda_2 = 1400$ nm and in the interval of angles of incidence of from 30° to 60°,
- a two-dimensional average of an absolute value of polarization splitting of smaller than or equal to 6.0 percentage points in the wavelength interval of from the wavelength $\lambda_1 = 380$ nm to the wavelength $\lambda_2 = 1600$ nm and in the interval of angles of incidence of from 30° to 60°.

The unit "percentage points" express a difference between two values given in percent.

The two-dimensional average of the absolute value of polarization splitting is calculated in the interval of angles of incidence of from 30° to 60° and in the wavelength interval, in particular in the wavelength interval of from 380 nm to 1200 nm, the wavelength interval of from 380 nm to 1400 nm and the wavelength interval of from 380 nm to 1600 nm, according to

$$polarization\ splitting\ \langle \Delta_{pol}(\lambda, \theta) \rangle [\lambda_1, \lambda_2] \times [\theta_1, \theta_2] = \frac{1}{n \cdot m} \sum_{i=0}^{n-1} \sum_{j=0}^{m-1} |\Delta_{pol}|(\lambda_i, \theta_j)$$

In the formula given before for the two-dimensional average of the absolute value of polarization splitting, $[\lambda_1, \lambda_2]$ denotes the wavelength interval with the wavelength $\lambda_1$ being 380 nm and the wavelength $\lambda_2$ being 1200 nm, 1400 nm or 1600 nm, and $[\theta_1, \theta_2]$ denotes the interval of angles of incidence with $\theta_1 = 30°$ and $\theta_2 = 60°$.

When anti-reflective coatings are used under oblique incidence, i.e. the angle of incidence is not 0°, polarization splitting $|\Delta_{pol}|$ is observed. $|\Delta_{pol}|$ is defined as absolute value of a difference in spectral reflectance for s-polarized light $R_s$ and p-polarized light $R_p$: $|\Delta_{pol}| = |R_s - R_p|$. Under oblique incidence the spectral reflectance R for unpolarized light is given by $R_a = \frac{R_s + R_p}{2}$ .

Preferably, the two-dimensional average absolute value of polarization splitting of the spectacle lens is, in the interval of angles of incidence of from 30° to 60°, in the wavelength interval of from the wavelength $\lambda1 = 380$ nm to the wavelength $\lambda_2 = 1200$ nm, i.e. in the wavelength interval of from 380 nm to 1200 nm, smaller than or equal to one of the following values: 3.8 percentage points, 3.6 percentage points, 3.0 percentage points, 2.8 percentage points. Preferably, the two-dimensional average absolute value of polarization splitting of the spectacle lens is, in the interval of angles of incidence of from 30° to 60°, in the wavelength interval of from 380 nm to 1200 nm, in one of the following ranges: a range of from 1.5 percentage points to 4.0 percentage points, a range of from 1.6 percentage points to 3.0 percentage points, a range of from 1.8 percentage points to 2.8 percentage points.

Preferably, the two-dimensional average absolute value of polarization splitting of the spectacle lens is, in the interval of angles of incidence of from 30° to 60°, in the wavelength interval in the wavelength interval of from the wavelength $\lambda_1 = 380$ nm to the wavelength $\lambda_2 = 1400$ nm, i.e. in the wavelength interval of from 380 nm to 1400 nm, smaller than or equal to one of the following values: 5.8%, 5.0%, 4.6%, 3.4%. Preferably, the two-dimensional absolute value of polarization splitting of the spectacle lens is, in the interval of angles of incidence of from 30° to 60°, in the wavelength interval of from 380 nm to 1400 nm, in one of the following ranges: a range of from 1.5 percentage points to 6.0 percentage points, a range of from 1.6 percentage points to 5.0 percentage points, a range of from 1.8 percentage points to 3.4 percentage points.

Preferably, the two-dimensional average absolute value of polarization splitting of the spectacle lens is, in the interval of angles of incidence of from 30° to 60°, in the wavelength interval of from the wavelength $\lambda_1 = 380$ nm to the wavelength $\lambda_2 = 1600$ nm, i.e. in the wavelength interval of from 380 nm to 1600 nm, smaller than or equal to one of the following values: 5.8 percentage points, 5.0 percentage points, 4.6 percentage points, 3.4 percentage points. Preferably, the two-dimensional absolute value of polarization splitting of the spectacle lens is, in the interval of angles of incidence of from 30° to 60°, in the wavelength interval of from 380 nm to 1600 nm, in one of the following ranges: a range of from 1.5 percentage points to 6.0 percentage points, a range of from 1.6 percentage points to 5.0 percentage points, a range of from 1.8 percentage points to 4.2 percentage points.

Preferably, the two-dimensional average of an absolute value of polarization splitting is calculated based on the following measurements using the LAMBDA 950 S UV/Vis/NIR spectrophotometer: In a first measurement, the spectral reflectance for s-polarized light and for p-polarized light is measured in the wavelength interval of from the wavelength $\lambda_1$ to the wavelength $\lambda_2$ at the angle of incidence of 30°. An absolute value of the difference of the spectral reflectance for s-polarized light and p-polarized light is calculated for each wavelength in said wavelength interval at the angle of incidence of 30°. In a second measurement, the spectral reflectance for s-polarized light and for p-polarized light is measured in the wavelength interval of from the wavelength $\lambda_1$ to the wavelength $\lambda_2$ at the angle of incidence of 45°. An absolute value of the difference of the spectral reflectance for s-polarized light and p-polarized light is calculated for each wavelength in said wavelength interval at the angle of incidence of 45°. In a third measurement, the spectral reflectance for s-polarized light and for p-polarized light is measured in the wavelength interval of from the wavelength $\lambda_1$ to the wavelength $\lambda_2$ at the angle of incidence of 60°. An absolute value of the difference of the spectral reflectance for s-polarized light and p-polarized light is calculated for each wavelength in said wavelength interval at the angle of incidence of 60°. A respective absolute value of the difference of the spectral reflectance for s-polarized light and p-polarized light at a respective angle of incidence is used to calculate the two-dimensional average of an absolute value of polarization splitting according to

$$polarization\ splitting\ \langle\Delta_{pol}(\lambda,\theta)\rangle[\lambda_1,\lambda_2]\times[\theta_1,\theta_2] = \frac{1}{n\cdot m}\sum_{i=0}^{n-1}\sum_{j=0}^{m-1}|\Delta_{pol}|(\lambda_i,\theta_j)$$

as mentioned before.

This is of advantage for applications which combine the before-described spectacle lenses comprising the single layer anti-reflective coating with, for example, electrooptical sensors. When light is reflected at the surface of a spectacle lens without an antireflection coating or with an a traditional (optical interference layer based) anti-reflective coating, the spectral reflectance for s-polarized and p-polarized light is different for angles of incidence >0° (polarization splitting). This especially becomes evident for angles of incidence > 30°. When optical interference layer based anti-reflective coatings are used on a spectacle lens the polarization splitting shows big variations as a function of angle of incidence and wavelength. As electrooptical sensors can have a difference in sensitivity for the different states of polarization it is advantageous that the spectacle lens does only introduce small differences in intensity for transmitted light resulting from a different spectral reflectances of different light polarizations.

Preferably, the spectacle lens comprising the anti-reflective coating, said anti-reflective coating being the single layer anti-reflective coating, said spectacle lens having the spectral reflectance of <1.5% at the angle of incidence of 0° in the wavelength interval of from the wavelength $\lambda_1$ to the wavelength $\lambda_2$, is characterized in that a thickness of said single layer anti-reflective coating is selected from one of the following ranges:

- a thickness of from 30 nm to 120 nm,
- a thickness of from 40 nm to 110 nm,
- a thickness of from 50 nm to 100 nm,
- a thickness of from 60 nm to 95 nm.

The thickness of the single layer is determined by X-ray reflectometry (XRR), preferably using the device D8 Advance, Bruker Corporation, USA. The device records the reflectivity of Cu K$_\alpha$ X-ray radiation for different x-ray angles of incidence of the x-ray radiation. Different to the angle of incidence as discussed before the x-ray angle of incidence $\theta$ is measured against the tangent of the surface of the spectacle lens. Starting from grazing incidence (x-ray angle of incidence $\theta$ = 0° to x-ray angles of incidence up to $\theta$ = 2°). In the case of a single layer oscillations are observed when plotting the reflected intensity of the Cu K$_\alpha$ X-ray radiation as a function of x-ray angle of incidence. The evaluation of these oscillations is described in X.-L. Zhou et al, Theoretical foundation of X-ray and neutron reflectometry, Physics Reports 257 (1995) 223-348, and results in the layer thickness and the surface roughness.

M. K. Omrani et al., disclose coating thicknesses of 150 nm, 200 nm and 300 nm. US 11,714,212 B2 discloses in column 12, lines 15 to 20, as thickness for nanostructure 1002 about 235 nm. Although the thickness of the single layer anti-reflective coating being in one of the before-mentioned ranges and ≤120 nm, thus significantly lower as disclosed in M. K. Omrani et al. and in US 11,714,212 B2, the single layer anti-reflective coating shows the before described optical properties.

Preferably, the spectacle lens comprising the anti-reflective coating, said anti-reflective coating being the single layer anti-reflective coating, said spectacle lens having the spectral reflectance of <1.5% at the angle of incidence of 0° in the wavelength interval of from the wavelength $\lambda_1$ to the wavelength $\lambda_2$, is characterized in that said spectacle lens has the spectral reflectance of smaller than or equal to 2.0% for unpolarized light in an additional wavelength interval of from the wavelength $\lambda_3$ to the wavelength $\lambda_4$, with 190 nm $\leq \lambda_3, \lambda_4 \leq$ 300 nm, $\lambda_3 < \lambda_4$, $\lambda_3 \neq \lambda_4$, $\lambda_3, \lambda_4 < \lambda_1$, and in the interval of angles of incidence of from 0° to 45°.

The spectacle lens having the spectral reflectance of smaller than or equal to 2.0% in the additional wavelength interval of from the wavelength $\lambda_3$ to the wavelength $\lambda_4$ is of advantage in applications where the spectacle lens comprising the anti-reflective coating is used in combination with electrooptical sensors working in a UV-B (280 nm to 315 nm) or UV-C (100 nm to 280 nm) range of ultraviolet radiation, ultraviolet radiation as defined in ISO 13666:2019(E), entry 3.1.3. For example, electrooptical sensors working in the UV-B or UV-C range may be used for measuring the intensity of UV-B or UV-C ultraviolet radiation reaching the eye of the spectacle lens wearer.

Preferably, the spectacle lens comprising the anti-reflective coating, said anti-reflective coating being the single layer anti-reflective coating, said spectacle lens having the spectral reflectance of <1.5% at the angle of incidence of 0° in the wavelength interval of from the wavelength $\lambda_1$ to the wavelength $\lambda_2$, is characterized in that said single layer anti-reflective coating is obtainable by

- treating a layer of aluminium on a surface of said spectacle lens with water of a temperature selected from one of the following ranges

  o a range of from 60°C to below the boiling temperature of water
  o a range of from 65°C to 90°C,
  o a range of from 70°C to 85°C,
  o a range of from 75°C to 80°C.

A "layer of aluminium" preferably is a single layer consisting essentially of aluminium. Preferably, the layer of aluminium is deposited, preferably as continuous layer, by physical vapour deposition, preferably by electron beam evaporation, on the surface of the spectacle lens. Preferably, a respective layer of aluminium is deposited by physical vapour deposition on at least one of the front surface and the back surface of the spectacle lens. The layer of aluminium consisting essentially of aluminium preferably considers an outermost oxide layer. In other words, the layer of aluminium on the surface of the spectacle lens is a layer of metallic aluminium that forms with atmospheric oxygen a native or passivation layer of aluminium oxide. Preferably, the spectacle lens comprising said layer of aluminium on one surface thereof has the spectral transmittance at the angle of incidence of 0° in the wavelength interval of from 380 nm to 1300 nm of at maximum one of the following spectral transmittances:

- said spectral transmittance in said wavelength interval being at maximum 3.3%
- said spectral transmittance in said wavelength interval being at maximum 0.9%
- said spectral transmittance in said wavelength interval being at maximum 0.28%
- said spectral transmittance in said wavelength interval being at maximum 0.10%
- said spectral transmittance in said wavelength interval being at maximum 0.03%
- said spectral transmittance in said wavelength interval being at maximum 0.01%.

Spectral transmittance is defined analogously as in ISO 13666:2019(E), entry 3.17.1, as ratio of the spectral radiant or luminous flux transmitted by the spectacle lens comprising i) said layer of aluminium on one surface thereof or ii) a respective layer of aluminium of both surfaces thereof, to the incident spectral radiant or luminous flux at any specified wavelength, $\lambda$, for a specified angle of incidence.
Preferably, the spectacle lens comprising the respective layer of aluminium on both surfaces thereof has the spectral transmittance at the angle of incidence of 0° in the wavelength interval of from 380 nm to 1300 nm of at maximum one of the following spectral transmittances:

- said spectral transmittance in said wavelength interval being at maximum 0.3%
- said spectral transmittance in said wavelength interval being at maximum 0.025%
- said spectral transmittance in said wavelength interval being at maximum 0.0029%
- said spectral transmittance in said wavelength interval being at maximum 0.0003%
- said spectral transmittance in said wavelength interval being at maximum 0.00005%
- said spectral transmittance in said wavelength interval being at maximum 0.000003%.

"Treating" the layer of aluminium on the surface of the spectacle lens with water of a temperature selected from one of the following ranges

- a range of from 60°C to below the boiling temperature of water
- a range of from 65°C to 90°C
- a range of from 70°C to 85°C
- a range of from 75°C to 80°C

preferably is done by immersing the spectacle lens comprising said layer of aluminium in water of one of the before-mentioned temperature ranges. For treating the layer of aluminium on the surface of the spectacle lens, preferably deionized water is used. Preferably, deionized water is characterized by a conductivity of < 1 $\mu$S/cm.
By treating the layer of aluminium on the surface of the spectacle lens with water of one the before-mentioned temperature ranges, the layer of aluminium visibly starts losing its metallic character. Treating the layer of aluminium on the surface of the spectacle lens with water of one the before-mentioned temperature ranges preferably ends when its metallic character has visibly disappeared. Preferably, a period from a point of time when the spectacle lens comprising the layer of aluminium is fully immersed in water, i.e. when the layer of aluminium on the surface of the spectacle lens is covered with water, to a point of time when the metallic character of said layer of aluminium has disappeared is within one of the following ranges: a period of 3 minutes to 10 minutes, a period of 3:30 minutes to 8 minutes, a period of 4 minutes to 6 minutes.

The disappearance of the metallic character of the layer means that the spectral transmittance of the spectacle lens increases.

In case the spectacle lens comprises, before a treatment of the layer of aluminium with water of one the before-mentioned temperature ranges, on one surface thereof said layer of aluminium, the spectral transmittance of the spectacle lens is, at the angle of incidence of 0°, after said treatment of said layer of aluminium with water of one the before-mentioned temperature ranges, preferably >90%, in a wavelength interval of from the cut-off wavelength $\lambda_c$ of the spectacle lens without any coating, to a minimum wavelength at which due to an absorptance of the spectacle lens without any coating, the spectral transmittance is $\leq 86\%$. Both, the spectral transmittance of >90% and the spectral transmittance of $\leq 86\%$ are with respect to the angle of incidence of 0°.

In case the spectacle lens comprises, before the treatment of the respective layer of aluminium with water of one the before-mentioned temperature ranges, on both surfaces thereof the respective layer of aluminium, the spectral transmittance of the spectacle lens is, at the angle of incidence of 0°, after the said treatment of the respective layer of aluminium with water of one the before-mentioned temperature ranges, preferably > 94%, in a wavelength interval of from the cut-off wavelength $\lambda_c$ of the spectacle lens without any coating, to a minimum wavelength at which due to an absorptance of the spectacle lens without any coating, the spectral transmittance is $\leq 86\%$. Both, the spectral transmittance of >94% and the spectral transmittance of $\leq 86\%$ are with respect to the angle of incidence of 0°.

Treating the layer of aluminium on the surface of the spectacle lens with water of a temperature significantly below the temperature of 400°C used for heat treating the porous $Al_2O_3$ in M. K. Omrani et al., Wide-angle broadband antireflection coatings based on boomerang-like alumina nanostructures in visible region, Scientific Reports (2022) 12:904, https://www.nature.com/articles/s41598-022-04928-2 is an elegant way to avoid temperatures that are detrimental to spectacle lenses based on optical materials such as thermosetting hard resins or thermoplastic hard resins, the optical material as defined in ISO 13666:2019(E), entry 3.3.1, the thermosetting hard resin as defined in ISO 13666:2019(E), entry 3.3.3, the thermoplastic hard resin as defined in ISO 13666:2019(E), entry 3.3.4.

Evaporating aluminium instead of aluminium oxide as described in US 11,714,212 B2 allows to use much simpler evaporation machines to deposit the layer. For aluminium metal the evaporation in a vacuum chamber with a pressure of 10E-4 mbar starts around a temperature of the aluminium of 1000°C, while at the same pressure aluminium oxide needs a temperature of around 2200°C to start evaporation. This simplifies the thermal management of the vacuum chamber significantly and allows the coating of temperature sensitive materials in closer proximity to the evaporation source. Additionally, the temperatures needed to evaporate aluminium can be reached with a thermal evaporator which is much less costly than an electron beam gun needed to evaporate aluminium oxide.

The data set comprises at least one kind of the following kinds of data:

(i) data of the spectacle lens, the spectacle lens as described before, the data of the spectacle lens being configured for the purpose of a use of of the data for a manufacture of the spectacle lens described before,
(ii) data of the spectacle lens, the spectacle lens as described before, the data of the spectacle lens being configured to be fed to one manufacturing machine or more manufacturing machines for manufacturing the spectacle lens described before,
(iii) data of the spectacle lens, the spectacle lens as described before, the data of the spectacle lens containing computer-readable instructions for controlling one manufacturing machine or more manufacturing machines to manufacture the spectacle lens as described before.

The data set may be stored on the computer-readable storage medium or carried by the data signal. The computer-readable medium may be the non-tangible computer-readable storage medium.

The method for manufacturing a spectacle lens, said spectacle lens comprising an anti-reflective coating, said anti-reflective coating as defined in ISO 13666:2019(E), entry 3.18.3, is characterized in the step of:

- treating a layer of aluminium on a surface of said spectacle lens with water of a temperature selected from one of the following ranges

  ◦ a range of from 60°C to below the boiling temperature of water
  ◦ a range of from 65°C to 90°C
  ◦ a range of from 70°C to 85°C
  ◦ a range of from 75°C to 80°C

to result in said anti-reflective coating.

As mentioned before by treating the layer of aluminium on the surface of the spectacle lens with water of one the before-mentioned temperature ranges, the layer of aluminium visibly starts losing its metallic character. The disappearance of the metallic character and an accompanying increase in spectral transmittance has been found to result from a conversion of the layer of aluminium into a layer of aluminium oxide, preferably the before-described sponge-like layer of aluminum oxide.

The conversion of the layer of aluminium to the layer of aluminium oxide, i.e. the conversion from metal to an oxidic form of aluminium, can be proven by a determination of an elemental composition of said layer of aluminium oxide. The elemental composition of the layer of aluminium as well as of the layer of aluminium oxide preferably is determined when the spectacle lens comprises a respective before-mentioned layer, preferably via energy dispersive X-ray analysis, for example using the scanning electron microscope ZEISS Auriga 40, equipped with the Oxford Instruments Ultim Max 40, EDS detector.

"To result" in the anti-reflective coating means that the layer of aluminium has been converted on the surface of the spectacle lens in the layer of aluminium oxide. The layer of aluminium oxide acts as anti-reflective coating of the spectacle lens or is the anti-reflective coating of the spectacle lens. Preferably, said layer of aluminium oxide is a single layer of aluminium oxide. This in turn means that preferably a thickness of the layer of aluminium on the surface of the spectacle lens is selected such that by the before-described treatment of the layer of aluminium on the surface of the spectacle lens with water of one of the before-mentioned temperature ranges results in the single layer of aluminium oxide. In other words, the thickness of the layer of aluminium preferably is selected such that the conversion from the layer of aluminium to the layer of aluminium oxide is complete. That the layer of aluminium oxide, i.e. that the anti-reflective coating is a single layer on the surface of the spectacle lens can be proven by x-ray reflectometry, preferably using a device with a Cu-K$_\alpha$ x-ray source, for example the D8 Advance, showing typical oscillations of a single layer, thereby not identifying features that hint to an intrinsic substructure of the layer of aluminium oxide, such as a double layer.

Avoiding temperature of 400° as described by Omrani et al. makes the before-described method independent from the optical material of spectacle lenses such as mineral glass that allow the application of such a high temperature. An avoidance of a temperature above a temperature that results in a loss of properties, or a deformation of the spectacle is thus attractive for spectacle lenses based on optical materials such as the thermosetting hard resin or the thermoplastic hard resin.

With respect to the optical properties of the anti-reflective coating reference is made to the description before.

Preferably, the method for manufacturing the spectacle lens, the spectacle lens comprising the anti-reflective coating, the anti-reflective coating as defined in ISO 13666:2019(E), entry 3.18.3, the method is characterized in one of the following steps:

a) selecting a minimum thickness of the layer of aluminium on the surface of said spectacle lens such that the spectral transmittance of said spectacle lens at the angle of incidence of 0° in the wavelength interval of from the wavelength $\lambda_1$ = 380 nm to the wavelength $\lambda_2$ = 1300 nm and is at maximum one of the following:

- said spectral transmittance in said wavelength interval being at maximum 3.3%,
- said spectral transmittance in said wavelength interval being at maximum 0.9%,
- said spectral transmittance in said wavelength interval being at maximum 0.28%,
- said spectral transmittance in said wavelength interval being at maximum 0.10%,
- said spectral transmittance in said wavelength interval being at maximum 0.03%,
- said spectral transmittance in said wavelength interval being at maximum 0.01%,
  or

b) selecting each of a minimum thickness of the layer of aluminium on the surface of said spectacle lens and a minimum thickness of a further layer of aluminium on an opposite surface to said surface of said spectacle lens such that the spectral transmittance of said spectacle lens at the angle of incidence of 0° in the wavelength interval of from the wavelength $\lambda_1$ = 380 nm to the wavelength $\lambda_2$ = 1300 nm is at maximum one of the following:

- said spectral transmittance in said wavelength interval being at maximum 0.3%,
- said spectral transmittance in said wavelength interval being at maximum 0.025%,
- said spectral transmittance in said wavelength interval being at maximum 0.0029%,
- said spectral transmittance in said wavelength interval being at maximum 0.0003%,
- said spectral transmittance in said wavelength interval being at maximum 0.00005%,
- said spectral transmittance in said wavelength interval being at maximum 0.000003%.

Preferably, the spectral transmittance of the spectacle lens at the angle of incidence of 0° is also in in the wavelength interval of from the wavelength $\lambda_1 = 350$ nm to the wavelength $\lambda_2 = 1300$ nm at a maximum that is equal to a respective maximum mentioned before.

A minimum thickness of the aluminium layer is needed to ensure that the single layer anti-reflection coating forms of the sponge-like structure by using the method described before.

In case only one surface of the spectacle lens comprises the layer of aluminium, i.e. in case either the front surface or the back surface of the spectacle lens comprises the layer of aluminium, preferably the spectral transmittance of the spectacle lens at the angle of incidence of 0° in the wavelength interval of from the wavelength $\lambda_1 = 380$ nm to the wavelength $\lambda_2 = 1300$ nm or of from the wavelength $\lambda_1 = 350$ nm to the wavelength $\lambda_2 = 1300$ nm is at maximum as listed before. For achieving said spectral transmittance of the spectacle lens, the minimum thickness of the layer of aluminium preferably is within one of the following ranges:

- the minimum thickness being in a range of from 20 nm to 110 nm,
- the minimum thickness being in a range of from 25 nm to 100 nm,
- the minimum thickness being in a range of from 30 nm to 90 nm,
- the minimum thickness being in a range of from 35 nm to 80 nm.

The thickness of the layer of aluminium is derived from the measurements of the spectral transmittance by modelling the spectral transmittance data with the software Optilayer, OptiLayer 64 for Windows, Version 14.57, OptiLayer GmbH, Germany. Using data for the refractive index and the absorption coefficient of aluminium, the spectral transmittance of the spectacle lens coated with the layer of aluminium can be calculated by using the thickness of the layer of aluminium as adjusting parameter.

In case both surfaces of the spectacle lens comprise the layer of aluminium, i.e. in case both the front surface and the back surface of the spectacle lens each comprise the layer of aluminium, preferably the spectral transmittance of the spectacle lens at the angle of incidence of 0° in the wavelength interval of from the wavelength $\lambda_1 = 380$ nm to the wavelength $\lambda_2 = 1300$ nm or of from the wavelength $\lambda_1 = 350$ nm to the wavelength $\lambda_2 = 1300$ nm is at maximum as listed before. In other words, in case the layer of aluminium is on the front surface of the spectacle lens the further layer of aluminium is on the opposite surface of the front surface, i.e. the back surface of the spectacle lens, and vice versa, preferably the spectral transmittance of the spectacle lens at the angle of incidence of 0° in the wavelength interval of from the wavelength $\lambda_1 = 380$ nm to the wavelength $\lambda_2 = 1300$ nm or of from the wavelength $\lambda_1 = 350$ nm to the wavelength $\lambda_2 = 1300$ nm is at maximum as listed before. For achieving said spectral transmittance of said spectacle lens, the minimum thickness of a sum of the thickness of the layer of aluminium on the front surface and of the thickness of the layer of aluminium on the back surface of the spectacle lens preferably is within one of the following ranges:

- the minimum thickness being in a range of from 40 nm to 220 nm
- the minimum thickness being in a range of from 50 nm to 200 nm,
- the minimum thickness being in a range of from 60 nm to 180 nm,
- the minimum thickness being in a range of from 70 nm to 160 nm.

Preferably, thereby the minimum thickness of the layer of aluminium on either of the surfaces of the spectacle lens is 25 nm.

The thicknesses of the layers of aluminium are derived from the measurements of the spectral transmittance by modelling the spectral transmittance data with the software Optilayer, OptiLayer 64 for Windows, Version 14.57, OptiLayer GmbH, Germany. Using data for the refractive index and the absorption coefficient of aluminium, the spectral transmittance of the spectacle lens coated with the layers of aluminium can be calculated by using the thicknesses of the layers of aluminium as adjusting parameter.

Preferably, the method for manufacturing the spectacle lens, the spectacle lens comprising the anti-reflective coating, the anti-reflective coating as defined in ISO 13666:2019(E), entry 3.18.3, the method is characterized in one of the following steps:

a) selecting a maximum thickness of the layer of aluminium on the surface of said spectacle lens such that, after treating said layer of aluminium on said surface of said spectacle lens with water of the temperature selected from one of the following ranges

- a range of from 60°C to below the boiling temperature of water
- a range of from 65°C to 90°C
- a range of from 70°C to 85°C
- a range of from 75°C to 80°C,

at the angle of incidence of 0°, the spectral transmittance of said spectacle lens is >90%, in the wavelength range of from the cut-off wavelength $\lambda_c$ of the spectacle lens to a minimum wavelength at which the spectral transmittance of said spectacle lens without any coating is $\leq 86\%$,

or

b) selecting each of a maximum thickness of the layer of aluminium on the surface of the spectacle lens and a maximum thickness of said further layer of aluminium on the opposite surface to said surface of said spectacle lens such that, after treating said layer of aluminium on said surface of said spectacle lens with water of the temperature selected from one of the following ranges

- a range of from 60°C to below the boiling temperature of water
- a range of from 65°C to 90°C
- a range of from 70°C to 85°C
- a range of from 75°C to 80°C,

at the angle of incidence of 0°, the spectral transmittance of said spectacle lens is >94%, in the wavelength range of from the cut-off wavelength $\lambda_c$ of the spectacle lens to a minimum wavelength at which the spectral transmittance of said spectacle lens without any coating is $\leq 86\%$.

In case only one surface of the spectacle lens comprises the layer of aluminium, i.e. in case either the front surface or the back surface of the spectacle lens comprises the layer of aluminium, preferably the spectral transmittance of the spectacle lens, at the angle of incidence of 0°, is >90% in the wavelength range of from the cut-off wavelength $\lambda_c$ of the spectacle lens to a minimum wavelength at which, preferably due to an absorptance of the spectacle lens without any coating, the spectral transmittance is $\leq 86\%$ after the treatment of said layer of aluminium with water of the temperature of one of the before-mentioned ranges. For achieving, after said treatment, said spectral transmittance of the spectacle lens, the maximum thickness of the layer of aluminium on the surface of the spectacle lens, before the treatment of said layer of aluminium with water of the temperature of one of the before-mentioned ranges, preferably is within one of the following ranges:

- the maximum thickness being in a range of from 40 nm to 120 nm,
- the maximum thickness being in a range of from 50 nm to 110 nm,
- the maximum thickness being in a range of from 60 nm to 100 nm,
- the maximum thickness being in a range of from 70 nm to 90 nm.

In case both surfaces of the spectacle lens comprise the layer of aluminium, i.e. in case both the front surface and the back surface of the spectacle lens each comprise the layer of aluminium, preferably the spectral transmittance of the spectacle lens, at the angle of incidence of 0°, is >94% in the wavelength range of from the cut-off wavelength $\lambda_c$ of the spectacle lens to a minimum wavelength at which, preferably due to an absorptance of the spectacle lens without any coating, the spectral transmittance is $\leq 86\%$ after the treatment of said layer of aluminium with water of the temperature of one of the before-mentioned ranges. For achieving, after said treatment, said spectral transmittance of the spectacle lens the maximum thickness of a sum of the thickness of the layer of aluminium on the front surface and the thickness of the layer of aluminium on the back surface of the spectacle lens, before the treatment of the respective layer of aluminium with water of the temperature of one of the before-mentioned ranges, preferably is within one of the following ranges:

- the maximum thickness being in a range of from 80 nm to 240 nm,
- the maximum thickness being in a range of from 100 nm to 220 nm,
- the maximum thickness being in a range of from 120 nm to 200 nm,
- the maximum thickness being in a range of from 140 nm to 180 nm,

Preferably, thereby the maximum thickness of the layer of aluminium on either of the surfaces of the spectacle lens is 120 nm.

The conversion of the layer of aluminium into the layer of aluminium oxide is accompanied by an increase of the thickness of the layer of aluminium oxide compared to a respective minimum thickness of the layer of aluminium or compared to a respective maximum thickness of the layer of aluminium. This increase in thickness is assumed to be due the porous or sponge-like structure of the layer of aluminium oxide.

The increase in thickness is in one of the following ranges:

- the increase in thickness is between 3% to 30%,
- the increase in thickness is between 5% to 25%,

- the increase in thickness is between 8% to 22%,
- the increase in thickness is between 12% to 20%.

The conversion of the layer of aluminium on a respective surface of the spectacle lens into the layer of aluminium oxide using the method described before and the accompanying increase in spectral transmittance of the spectacle lens ensures that the layer of aluminium oxide acts as or is the anti-reflective coating of the spectacle lens, providing to the spectacle lens the optical properties mentioned before.

Preferably, the method for manufacturing the spectacle lens, the spectacle lens comprising the anti-reflective coating, the anti-reflective coating as defined in ISO 13666:2019(E), entry 3.18.3, characterized in that a spectral reflectance of said spectacle lens is <1.5% at an angle of incidence of 0° in a wavelength range of from a wavelength $\lambda_1$ to a wavelength $\lambda_2$, said spectral reflectance as defined in ISO 13666:2019(E), entry 3.17.15, said wavelength range of from said wavelength $\lambda_1$ to said wavelength $\lambda_2$, with 380 nm $\leq \lambda_1, \lambda_2 \leq$ 2500 nm, $\lambda_1 \neq \lambda_2$, $\lambda_2 > \lambda_1$, extends over one of the following widths w, w = $\lambda_2$ - $\lambda_1$,

- a width of 1200 nm,
- a width of 1300 nm,
- a width of 1400 nm.

Reference is made to the description given before.

Preferably, the method for manufacturing the spectacle lens, the spectacle lens comprising the anti-reflective coating, the anti-reflective coating as defined in ISO 13666:2019(E), entry 3.18.3, characterized in that said spectacle lens has the spectral reflectance for unpolarized light of < 2.1% at the angle of incidence of 45° in said wavelength interval, said spectral reflectance extending over one of the following widths

- a width of at least 800 nm,
- a width of at least 900 nm,
- a width of at least 1000 nm.

Reference is made to the description given before.

Preferably, the method for manufacturing the spectacle lens, the spectacle lens comprising the anti-reflective coating, the anti-reflective coating as defined in ISO 13666:2019(E), entry 3.18.3, characterized in that said spectacle lens has the spectral reflectance for unpolarized light of < 5% at the angle of incidence of 60° in said wavelength interval, said spectral reflectance extending over one of the following widths

- a width of at least 1100 nm,
- a width of at least 1200 nm,
- a width of at least 1300 nm.

Reference is made to the description given before.

Preferably, the method for manufacturing the spectacle lens, the spectacle lens comprising the anti-reflective coating, the anti-reflective coating as defined in ISO 13666:2019(E), entry 3.18.3, characterized in that said spectacle lens has

- an average spectral reflectance for unpolarized light of smaller than or equal to 20% at the angle of incidence of 75° in said wavelength interval of from the wavelength $\lambda1$ = 380 nm to the wavelength $\lambda2$ = 1200 nm,
- an average spectral reflectance for unpolarized light of smaller than or equal to 21% at the angle of incidence of 75° in said wavelength interval of from the wavelength $\lambda1$ = 380 nm to the wavelength $\lambda2$ = 1400 nm,
- an average spectral reflectance for unpolarized light of smaller than or equal to 21% at the angle of incidence of 75° in said wavelength interval of from the wavelength $\lambda_1$ = 380 nm to the wavelength $\lambda_2$ = 1600 nm.

Reference is made to the description given before.

Preferably, the method for manufacturing the spectacle lens, the spectacle lens comprising the anti-reflective coating, the anti-reflective coating as defined in ISO 13666:2019(E), entry 3.18.3, characterized in that said spectacle lens has

- a two-dimensional average spectral reflectance for unpolarized light of smaller than or equal to 3.0% in said wavelength interval of from the wavelength $\lambda_1$ = 380 nm to the wavelength $\lambda_2$ = 1200 nm and in an interval of angles of incidence of from 0° to 60°,

- a two-dimensional average spectral reflectance for unpolarized light of smaller than or equal to 3.5% in said wavelength interval of from the wavelength $\lambda 1 = 380$ nm to the wavelength $\lambda 2 = 1400$ nm and in an interval of angles of incidence of from 0° to 60°,
- a two-dimensional average spectral reflectance for unpolarized light of smaller than or equal to 4.0% in said wavelength interval of from the wavelength $\lambda_1 = 380$ nm to the wavelength $\lambda_2 = 1600$ nm and in an interval of angles of incidence of from 0° to 60°.

Reference is made to the description given before.

Preferably, the method for manufacturing the spectacle lens, the spectacle lens comprising the anti-reflective coating, the anti-reflective coating as defined in ISO 13666:2019(E), entry 3.18.3, characterized in that said spectacle lens has

- a two-dimensional average of an absolute value of polarization splitting of smaller than or equal to 4.0 percentage points in the wavelength interval of from the wavelength $\lambda_1 = 380$ nm to the wavelength $\lambda_2 = 1200$ nm and in the interval of angles of incidence of from 30° to 60°,
- a two-dimensional average of an absolute value of polarization splitting of smaller than or equal to 6.0 percentage points in the wavelength interval of from the wavelength $\lambda 1 = 380$ nm to the wavelength $\lambda 2 = 1400$ nm and in the interval of angles of incidence of from 30° to 60°,
- a two-dimensional average of an absolute value of polarization splitting of smaller than or equal to 6.0 percentage points in the wavelength interval of from the wavelength $\lambda_1 = 380$ nm to the wavelength $\lambda_2 = 1600$ nm and in the interval of angles of incidence of from 30° to 60°.

Reference is made to the description given before.

Preferably, the method for manufacturing the spectacle lens, the spectacle lens comprising the anti-reflective coating, the anti-reflective coating as defined in ISO 13666:2019(E), entry 3.18.3, characterized in that a thickness of said single layer anti-reflective coating is selected from one of the following ranges:

- a thickness of from 40 nm to 120 nm,
- a thickness of from 50 nm to 110 nm,
- a thickness of from 55 nm to 100 nm,
- a thickness of from 60 nm to 95 nm.

Reference is made to the description given before.

Figure 1: Spectral transmittance of the spectacle lens according to comparative example 2 (with hard coating) (broken line) and the spectacle lens according to example 1 (with hard coating and the single layer anti-reflection coating) (solid line).
Figure 2: Single side spectral reflectance for unpolarized light ($R_a$) of the spectacle lens according to example 3 for different angles of incidence (angle of incidence = aoi).
Figure 3: XRR measurement of the spectacle lens according to example 3.
Figure 4: Absolute value of the polarization splitting for angles of incidence of aoi= 30°, aoi= 45° and aoi= 60° of the spectacle lens according to example 3.
Figure 5: SEM picture of the single layer anti-reflection coating of the spectacle lens according to example 1.
Figure 6: Optical loss for the spectacle lens according to example 2 (broken line) and the spectacle lens according to example 4 (solid line).
Figure 7: Single side spectral reflectance for unpolarized light ($R_a$) of the spectacle lens according to example 3 for different angles of incidence in the wavelength interval of from 190 nm to 250 nm.

**I Method of manufacturing the spectacle lenses**

Example 1

A thin layer (50nm) of aluminium metal (Al metal) was deposited onto a first surface of a spectacle lens (spherical power of-2 dioptres) made of 1.5 lens material (refractive index n=1.5) coated with a polysiloxane hard coating with refractive index of n=1.49.

The Al layer was deposited by electron beam evaporation in a Bühler Leybold Optics Syrus 1100 vacuum coater. Coils of length 1cm have been winded from aluminium wire with a purity of 99,999% and a diameter of 1mm supplied by Umicore. The coils have been placed in a BN crucible that then were placed inside the crucible plate of the e-beam gun of the vacuum coater. The coating chamber was then evacuated to a pressure below 10-4 mbar. After reaching the vacuum the e-beam was switched on and the coils in the crucible have been melted to form a regulus inside the crucible. Then the chamber was vented and the procedure was repeated until the crucible was filled with Al metal. Then the spectacle lens was placed in the substrate holder of the vacuum coater and the chamber was evacuated down to a pressure of 2*10-5 mbar.

The electron beam gun was switched on and the power was increased until a deposition rate for the Al of 0.5nm/s was reached. The thickness monitoring control system of the vacuum coater stopped the deposition once an Al nominal layer thickness of 50 nm was reached.

The spectacle lens had been coated on both sides. To do so after coating the first side the vacuum chamber was vented, the spectacle lens had been turned, the vacuum chamber was evacuated again, and the deposition on the second surface was done in the same way as for the first surface.

After coating the second surface the vacuum chamber was vented and the spectacle lens had been taken out of the vacuum chamber.

As a second step, the spectacle lens that had been coated with the Al metal had been subject to hot water treatment (HWT). To do so, the spectacle lens had been immersed in hot de-ionized water in a beaker with at a temperature T=75°C for a time period of 4:30 min. The hot water was stirred during the immersion time.

After the time period the spectacle lens had been removed from the beaker and residual water was blown off the respective surfaces using clean compressed air.

During the hot water immersion, it was observed that the metallic appearance of the aluminium layer changed and that the spectacle lens became transparent.

Example 2

A spectacle lens (spherical power of 0 dioptre) made of 1.5 lens material (refractive index n=1.5) coated with a polysiloxane hard coating with refractive index of n=1.49 was treated in the same manner as described above in example 1.

Example 3

A spectacle lens having an absolute value of a radius of curvature for both the front surface and the back surface of >1000 mm and made of 1.5 lens material (refractive index n=1.5) coated with a polysiloxane hard coating with refractive index of n=1.49 was treated in the same manner as described above in example 1.

Example 4

A thin layer (40nm) of Al metal was deposited onto a first surface of a spectacle lens (spherical power of 0 dioptres) made of 1.5 lens material (refractive index n=1.5) coated with a polysiloxane hard coating with refractive index of n=1.49 in the same manner as described above in example 1. The only difference was that the thickness monitoring control system of the vacuum coater stopped the deposition once an Al nominal layer thickness of 40 nm was reached.

Example 5

Prior depositing the Al layer to the first surface of the spectacle lens of example 1, the spectacle lens of example 1 (spherical power of -2 dioptres, made of 1.5 lens material (refractive index n=1.5) coated with a polysiloxane hard coating with refractive index of n=1.49) was treated in the vacuum chamber with an ion pre-treat process (IPC). When the vacuum coater reached a vacuum of 2*10-5 mbar the ion source available in the vacuum chamber was switched on. As a result Ar+ Ions with an energy of approximately 120eV with an ion current density of $80\mu A/cm^2$ reach the surface of the spectacle lens. This ion treatment was done for 60s. Then the ion source was switched off and the deposition of the Al was started in the same manner as described in example 1.

Comparative example 1:

A spectacle lens (spherical power of -2 dioptre) with a polysiloxane hard coating and coated with a layer of aluminium metal of thickness 50nm on both surfaces.

Comparative example 2:

A spectacle lens (spherical power of -2 dioptre) made of 1.5 lens material (refractive index n=1.5) coated with a polysiloxane hard coating with refractive index of n=1.49.

Comparative example 3:

Comparative example 3 is a sheet of glass with refractive index n=1.52 coated with a single layer of magnesium fluoride with an index of refraction of n=1.38 and optical thickness at normal incidence one quarter-wave at 600 nm, as described in H A Macleod, Thin-Film Optical Filters, third edition, Institute of Physics Publishing Bristol and Philadelphia, ISBN 0 7503 0688 2, Figure 3.18 a.

Comparative example 4:

Comparative example 4 is a four-layer anti-reflective coating on glass with a refractive index of n=1.52: glass/ $TiO_2$ (49.23 nm)/ $MgF_2$ (35.06 nm+22.66 nm)/ $TiO_2$ (57.96 nm)/ $MgF_2$ (154.47 nm) as disclosed in H A Macleod, Thin-Film Optical Filters, third edition, Institute of Physics Publishing Bristol and Philadelphia, ISBN 0 7503 0688 2, table 3.4.

Comparative example 5:

Comparative example 5 is a seven layer anti-reflective coating on glass with a refractive index of n=1.52: $MgF_2$ (294.54 nm)/ $TiO_2$ (39.99 nm)/ $MgF_2$ (44.31 nm)/ $TiO_2$ (240.84 nm)/ $MgF_2$ (17.46 nm)/ $TiO_2$ (50.70 nm)/ $MgF_2$ (140.80 nm) as disclosed in H A Macleod, Thin-Film Optical Filters, third edition, Institute of Physics Publishing Bristol and Philadelphia, ISBN 0 7503 0688 2, table 3.4.

Comparative example 6:

Comparative example 6 is an anti-reflective coating with 28 layers for a silica substrate as described in Frédéric Lemarquis, et al. Broadband antireflection coatings for visible and infrared ranges. CEAS Space Journal, 2019, 11 (4), pp.567-578. 10.1007/s12567- 019-00266-8. hal-02350435.

**II Characterization of the spectacle lenses**

IIa EDS

To investigate the elemental composition of the spectacle lenses, the respective spectacle lens was placed into the sample compartment of the scanning electron microscope ZEISS Auriga 40, Carl Zeiss Microscopy GmbH, Germany, equipped with the Oxford Instruments Ultim Max 40, Oxford Instruments plc, UK, energy-dispersive X-ray spectroscopy (EDS) detector. The results of the elemental composition in atomic% is given in the following table 1.

Table 1

|  | atomic percent of elements | | | | |
| --- | --- | --- | --- | --- | --- |
| Spectacle lens | C | O | Al | Si | Total |
| Example 1 | 22.33 | 49.44 | 6.18 | 22.05 | 100 |
| Comparative example 1 | 20.1 | 41.20 | 8.12 | 30.58 | 100 |

In the spectacle lens according to comparative example1 the elements C,O, Al ans Si were detected. The detection depth of an EDS measurement is typically several micrometers. The origin of the C, O and Si are the optical material of the spectacle lens and the polysiloxane-based hard coating. The Al is the Al that forms the metallic Al layer.

In the spectacle lens according to example 1, the same elements were detected as for the spectacle lens according to comparative example 1. The relative amount of oxygen was increased with respect to the spectacle lens according to example 1. From the elemental composition of the spectacle lens according to example 1 it was be concluded that the layer consists of aluminium oxide ($Al_2O_3$) and can comprise an aluminium oxide hydroxide ($AlO_x(OH)_{3-2x}$ (0<x<1)), for example in form of boehmite (AlOOH) or in form of gibbsite ($Al(OH)_3$) but also none crystalline forms of aluminium oxide hydroxide ($AlO_x(OH)_{3-2x}$ (0<x<1)).

IIb SEM

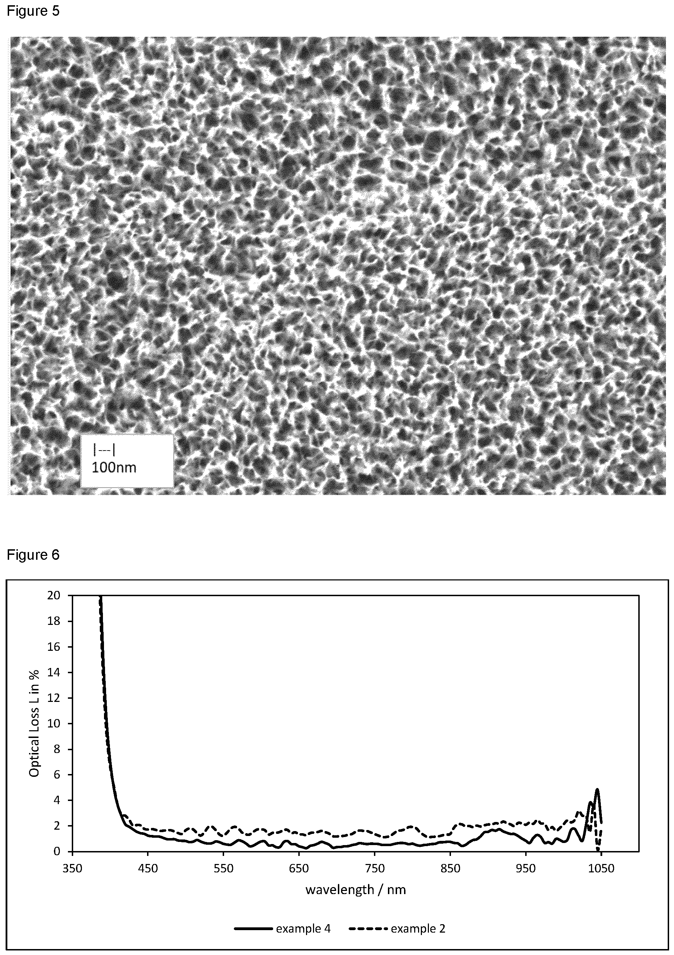

The morphology of the single layer anti-reflective coating of the spectacle lenses was characterized by placing the respective spectacle lens in the sample compartment of the scanning electron microscope ZEISS Auriga 40, Carl Zeiss Microscopy GmbH, Germany, equipped with the Oxford Instruments Ultim Max 40, Oxford Instruments plc, UK, energy-dispersive X-ray spectroscopy (EDS) detector. The conditions for obtaining the SEM images showing the sponge-like structure are: acceleration voltage: 1.2 kV; aperture: 30 μm; working distance 5.2 mm; pixel size 4.47 nm; detector: secondary electron detector; observation from top. In figure 5 the SEM picture of the spectacle lens according to example 1 is shown. As can be seen in the picture the single layer anti-reflective coating consists of a sponge-like structure. The evaluation of the picture using FFT method as described above revealed pore sizes ranging from 30 nm to 50 nm.

IIc XRR

The thickness and the surface roughness of the single layer anti-reflective coating of the spectacle lenses was measured by X-ray reflectometry (XRR), using the device D8 Advance, Bruker Corporation, USA. In figure 3 the reflected x-ray intensity as a function of angle $2\theta$ is shown. The thickness and the roughness of the layer is evaluated from the measurement using the software Leptos V7.14 from Bruker Corporation, USA. For the spectacle lens according to example 3, the thickness was evaluated to be 59 nm and the roughness 2.54 nm.

IId Spectral transmittance

The spectral transmittance of the spectacle lenses was measured using the using the LAMBDA 950 S UV/Vis/NIR spectrophotometer, PerkinElmer Waltham, USA.

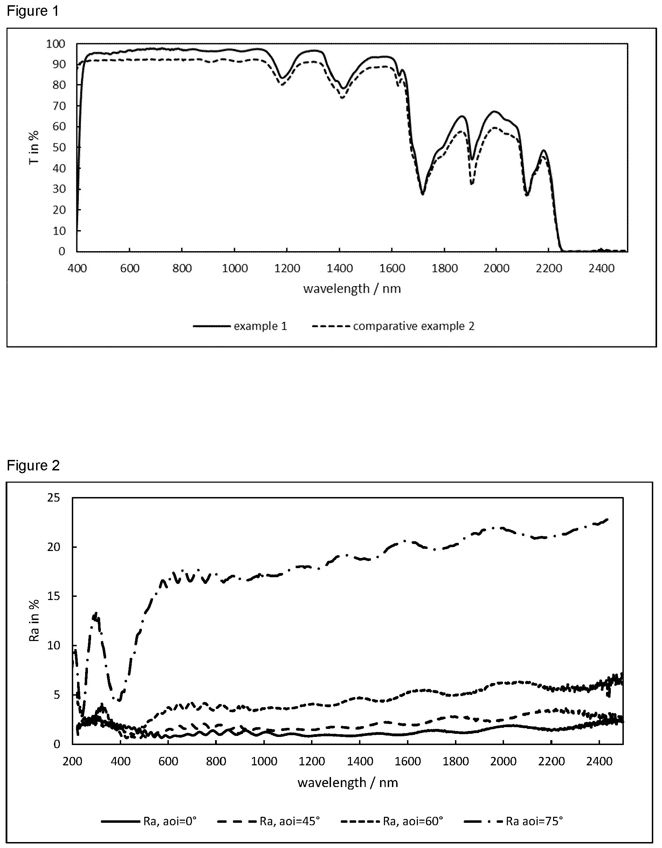

The spectral transmittance of the spectacle lens according to comparative example 1 was 0% within the measurement resolution of the instrument. The spectral transmittance of the spectacle lens according to example 1 was higher compared to the spectral transmittance of the spectacle lens according to comparative example 2 in the wavelength interval between 390 nm (cut-off wavelength $\lambda_c$ of the spectacle lens) to 1400 nm (the minimum wavelength at which the spectral transmittance is ≤80%). The spectral transmittance of the spectacle lenses according to example 1 and comparative example 2 is shown in figure 1.

IIe Spectral reflectance

The spectral reflectance of the spectacle lenses according to example 1, example 2, example 4 and example 5 was measured at an angle of incidence of 0° using the instrument F10-AR, Filmetrics, USA. The spectral reflectance of the spectacle lens according to example 3 for s-polarized and p-polarized light at angles of incidence of 8°, 30°, 45°, and 60° was measured in the wavelength interval between 200 nm and 2500 nm using the LAMBDA 950 S UV/Vis/NIR spectrophotometer, PerkinElmer Waltham, USA, equipped with the Universal Reflectance Accessory, PerkinElmer Waltham, USA, The spectral reflectance of the spectacle lens according to example 3 for s-polarized and p-polarized light at the angle of incidence 75° was measured using a DUV-VASE ellipsometer, J.A.Woollam Company, Lincoln NE, USA.

The spectral reflectance for unpolarized light $R_a$ was calculated from the measurements of spectral reflectance of s-polarized and p-polarized light using the equation $R_a = \frac{R_S + R_p}{2}$. The results are shown in figure 2.

The polarization splitting $\Delta_{pol}$ is defined as difference in spectral reflectance for s-polarized light $R_s$ and p-polarized light $R_p$: $\Delta_{pol} = R_s - R_p$. The absolute value of $\Delta_{pol}$ has been calculated from the measurements of the spectral reflectance of the spectacle lens according to example 3 for s-polarized and p-polarized light at angles of incidence of 30°, 45°, and 60° using the equation $|\Delta_{pol}| = |R_s - R_p|$. The results are shown in figure 4.

The following table 2 shows the wavelengths intervals and widths for which the spectral reflectance is smaller than 1.5% at an angle of incidence of 0° for the spectacle lenses of comparative examples 3 to 6 and of example 1.

Table 2

| Spectacle lens | $[\lambda_1,\lambda_2]$ for which R<1.5% at aoi =0° | width w=$\lambda_2$-$\lambda_1$ at aoi=0° for which R < 1.5% |
|---|---|---|
| Comparative example 3 | [490nm,760nm] | 270nm |
| Comparative example 4 | [395nm,720nm] | 325nm |
| Comparative example 5 | [425nm,965nm] | 540 nm |
| Comparative example 6 | [400nm,1200nm] | 800nm |
| Example 1 | [484nm,1920nm] | 1436 nm |

The following table 3 shows the wavelengths intervals and widths for which the spectral reflectance of unpolarized light is smaller than 2.1% at an angle of incidence of 45° for the spectacle lenses of comparative examples 3 to 5 and of example 3.

Table 3

| Spectacle lens | $[\lambda_1,\lambda_2]$ for which $R_a$ < 2.1% at aoi =45° | width w=$\lambda_2$-$\lambda_1$ for which $R_a$ < 2.1% at aoi=45° |
|---|---|---|
| Comparative example 3 | [425nm,640nm] | 215nm |
| Comparative example 4 | [355nm,630nm] | 275nm |
| Comparative example 5 | [385nm,890nm] | 505nm |
| Example 3 | [372nm,1452nm] | 1080nm |

The following table 4 shows the wavelengths intervals and widths for which the spectral reflectance of unpolarized light is smaller than 5% at an angle of incidence of 60° for the spectacle lenses of comparative examples 3 to 5 and of example 3.

Table 4

| Spectacle lens | $[\lambda_1,\lambda_2]$ for which $R_a$<5% at aoi =60° | width w=$\lambda_2$-$\lambda_1$ for which $R_a$< 5% at aoi=60° |
|---|---|---|
| Comparative example 3 | [380,580] | 200nm |
| Comparative example 4 | [325,590] | 265nm |
| Comparative example 5 | [360,585] and [655,860] | 225nm + 205nm = 430nm |
| Example 3 | [222nm,1576nm] | 1354nm |

The following table 5 shows the average spectral reflectance of unpolarized light at an angle of incidence of 75° in 3 wavelength intervals for the spectacle lenses of comparative examples 3 to 5 and of example 3.

Table 5

| Spectacle lens | $\langle R_a(\lambda)\rangle$[380, 1200], aoi = 75° | $\langle R_a(\lambda)\rangle$[380, 1400], aoi = 75° | $\langle R_a(\lambda)\rangle$[380, 1600], aoi = 75° |
|---|---|---|---|
| Comparative example 3 | 21,9% | 22,3% | 22,7% |
| Comparative example 4 | 26,0% | 26,6% | 27,1% |
| Comparative example 5 | 24,3% | 26,9% | 28,6% |
| Example 3 | 15,6% | 16,2% | 16,7% |

The following table 6 shows the two-dimensional average spectral reflectance of unpolarized light for different intervals of wavelength and the interval of angle of incidence for the spectacle lens of comparative examples 3 to 5 and of example 3.

Table 6

| Spectacle lens | $\langle R_a(\lambda,\theta)\rangle$ [380,1200] $\times$ [0°,60°] | $\langle R_a(\lambda,\theta)\rangle$ [380,1400] $\times$ [0°,60°] | $\langle R_a(\lambda,\theta)\rangle$ [380,1600] $\times$ [0°,60°] |
|---|---|---|---|
| Comparative example 3 | 3,6% | 3,9% | 4,1% |
| Comparative example 4 | 6,9% | 7,9% | 8,5% |
| Comparative example 5 | 4,8% | 7,6% | 10,0% |
| Example 3 | 2,0% | 2,0% | 2,1% |

The following table 7shows the two-dimensional average of the absolute value of polarization splitting in percentage points for different intervals of wavelength and the interval of angle of incidence for the spectacle lenses of comparative examples 3 to 5 and of example 3.

Table 7

| Spectacle lens | $\langle\Delta_{pol}(\lambda,\theta)\rangle[380,1200] \times [30°,60°]$ | $\langle\Delta_{pol}(\lambda,\theta)\rangle[380,1400] \times [30°,60°]$ | $\langle\Delta_{pol}(\lambda,\theta)\rangle[380,1600] \times [30°,60°]$ |
|---|---|---|---|
| Comparative example 3 | 6,0 | 6,4 | 6,8 |
| Comparative example 4 | 8,4 | 10,0 | 11,0 |
| Comparative example 5 | 4,2 | 7,1 | 9,7 |
| Example 3 | 2,5 | 2,6 | 2,8 |

IIf Optical Loss

The optical loss of the spectacle lenses was calculated using the equation $L(\lambda_i) = 100\% - R_d((\lambda_i)) - T(\lambda_i)$. With $R_d((\lambda_i))$ being the double side spectral reflectance at the wavelength $\lambda_i$ and $T((\lambda_i))$ being the spectral transmittance at the wavelength $\lambda_i$. The double side spectral reflectance and the spectral transmittance used for calculating the optical loss, was measured using a spectrometer UltraScan PRO, Hunter Associates Laboratory, Inc., USA. The results for the optical loss for the spectacle lenses according to example 2 and example 4 are shown in figure 6.

IIe Adhesion

For measuring the adhesion the surface of the spectacle lenses with the single layer anti-reflection coating is treated as described on page 157 to 158 of Byk, QC Solutions for Coatings and Plastics, 2018. A lattice pattern in the anti-reflection coating is cut through the coating to the spectacle lens. Then a strip of transparent adhesion tape (TESA 4104, tesa SE, Norderstedt, Germany) was applied over the lattice pattern of cuts and removed with a quick jerk. After the tape was removed the area of the lattice pattern was inspected for potential removal of the single layer antireflection coating.
The spectacle lenses according to example 1 and example 4 showed a removal of more than 65% of the single layer antireflection coating in the area of the lattice pattern. The spectacle lens according to example 5 resulted in a removal of less than 15% of the single layer antireflection coating in the area of the lattice pattern.

IIf Spectral reflectance in the UV range

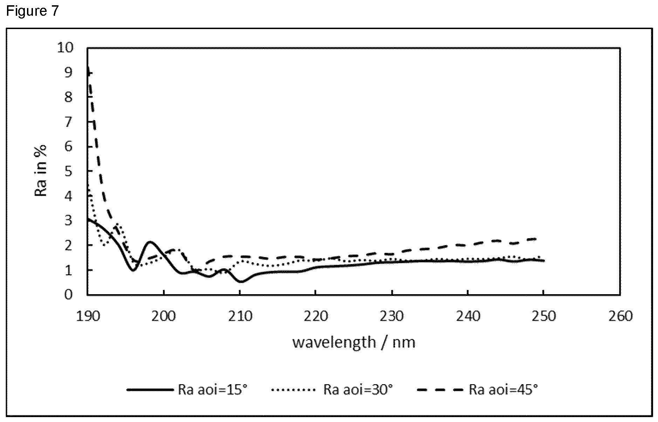

The spectral reflectance of the spectacle lens according to example 3 for s-polarized and p-polarized light in the wavelength interval of 190 nm to 250 nm and in the interval of angles of incidence 15° to 45° was measured using a DUV-VASE ellipsometer, J.A.Woollam Company, Lincoln NE, USA.
The spectral reflectance for unpolarized light $R_a$ was calculated from the measurements of spectral reflectance of s-polarized and p-polarized light using the equation $R_a = \frac{R_S + R_p}{2}$ . The results are shown in figure 7. The smallest accessible angle of incidence with the DUV-VASE ellipsometer is 15° which is considered as near normal incidence to represent the angle of incidence of 0°.

**Claims**

1.  Spectacle lens comprising an anti-reflective coating, said anti-reflective coating being a single layer anti-reflective coating, said spectacle lens having a spectral reflectance of < 1.5% at an angle of incidence of 0° in a wavelength interval of from a wavelength $\lambda_1$ to a wavelength $\lambda_2$, **characterized in that**

    said wavelength interval of from said wavelength $\lambda_1$ to said wavelength $\lambda_2$ extends over one of the following widths w, w = $\lambda_2 - \lambda_1$,

        - a width of at least 1200 nm,
        - a width of at least 1300 nm,
        - a width of at least 1400 nm,

    with 380 nm $\leq \lambda_1, \lambda_2 \leq$ 2500 nm, $\lambda_1 \neq \lambda_2$, $\lambda_2 > \lambda_1$.

**2.** Spectacle lens according to claim 1, **characterized in that** said spectacle lens has the spectral reflectance for unpolarized light of < 2.1% at the angle of incidence of 45° in said wavelength interval, said spectral reflectance extending over one of the following widths

- a width of at least 800 nm,
- a width of at least 900 nm,
- a width of at least 1000 nm.

**3.** Spectacle lens according to any one of the preceding claims, **characterized in that** said spectacle lens has the spectral reflectance for unpolarized light of < 5% at the angle of incidence of 60° in said wavelength interval, said spectral reflectance extending over one of the following widths

- a width of at least 1100 nm,
- a width of at least 1200 nm,
- a width of at least 1300 nm.

**4.** Spectacle lens according to any one of the preceding claims, **characterized in that** said spectacle lens has

- an average spectral reflectance for unpolarized light of smaller than or equal to 20% at the angle of incidence of 75° in a wavelength interval of from the wavelength $\lambda_1$ = 380 nm to the wavelength $\lambda_2$ = 1200 nm,
- an average spectral reflectance for unpolarized light of smaller than or equal to 21% at the angle of incidence of 75°in a wavelength interval of from the wavelength $\lambda_1$ = 380 nm to the wavelength $\lambda_2$ = 1400 nm,
- an average spectral reflectance for unpolarized light of smaller than or equal to 21% at the angle of incidence of 75° in a wavelength interval of from the wavelength $\lambda_1$ = 380 nm to the wavelength $\lambda_2$ = 1600 nm.

**5.** Spectacle lens according to any one of the preceding claims, **characterized in that** said spectacle lens has

- a two-dimensional average spectral reflectance for unpolarized light of smaller than or equal to 3.0% in a or in said wavelength interval of from the wavelength $\lambda_1$ = 380 nm to the wavelength $\lambda_2$ = 1200 nm and in an interval of angles of incidence of from 0° to 60°,
- a two-dimensional average spectral reflectance for unpolarized light of smaller than or equal to 3.5% in a or in said wavelength interval of from the wavelength $\lambda_1$ = 380 nm to the wavelength $\lambda_2$ = 1400 nm and in an interval of angles of incidence of from 0° to 60°,
- a two-dimensional average spectral reflectance for unpolarized light of smaller than or equal to 4.0% in a or in said wavelength interval of from the wavelength $\lambda_1$ = 380 nm to the wavelength $\lambda_2$ = 1600 nm and in an interval of angles of incidence of from 0° to 60°.

**6.** Spectacle lens according to any one of the preceding claims, **characterized in that** said spectacle lens has

- a two-dimensional average of an absolute value of polarization splitting of smaller than or equal to 4.0 percentage points in a or in said wavelength interval of from the wavelength $\lambda_1$ = 380 nm to the wavelength $\lambda_2$ = 1200 nm and in an interval of angles of incidence of from 30° to 60°,
- a two-dimensional average of an absolute value of polarization splitting of smaller than or equal to 6.0 percentage points in a or in said wavelength interval of from the wavelength $\lambda_1$ = 380 nm to the wavelength $\lambda_2$ = 1400 nm and in an interval of angles of incidence of from 30° to 60°,
- a two-dimensional average of an absolute value of polarization splitting of smaller than or equal to 6.0 percentage points in a or in said wavelength interval of from the wavelength $\lambda_1$ = 380 nm to the wavelength $\lambda_2$ = 1600 nm and in an interval of angles of incidence of from 30° to 60°.

**7.** Spectacle lens according to any one of the preceding claims, **characterized in that** a thickness of said single layer anti-reflective coating is selected from one of the following ranges:

- a thickness of from 30 nm to 120 nm,
- a thickness of from 40 nm to 110 nm,
- a thickness of from 50 nm to 100 nm,
- a thickness of from 60 nm to 95 nm.

**8.** Spectacle lens according to any one of the preceding claims, **characterized in that** said single layer anti-reflective coating is obtainable by

- treating a layer of aluminium on a surface of said spectacle lens with water of a temperature selected from one of the following ranges

◦ a range of from 60°C to below the boiling temperature of water
◦ a range of from 65°C to 90°C,
◦ a range of from 70°C to 85°C,
◦ a range of from 75°C to 80°C.

9. Data set comprising at least one kind of the following kinds of data:

(i) data of the spectacle lens, the spectacle lens according to any one of the preceding claims 1 to 8, the data of the spectacle lens being configured for the purpose of a use of of the data for a manufacture of the spectacle lens according to any one of the preceding claims 1 to 8,
(ii) data of the spectacle lens, the spectacle lens according to any one of the preceding claims 1 to 8, the data of the spectacle lens being configured to be fed to one manufacturing machine or more manufacturing machines for manufacturing the spectacle lens according to any one of the preceding claims 1 to 8,
(iii) data of the spectacle lens, the spectacle lens according to any one of the preceding claims 1 to 8, the data of the spectacle lens containing computer-readable instructions for controlling one manufacturing machine or more manufacturing machines to manufacture the spectacle lens according to any one of the preceding claims 1 to 8.

10. Method for manufacturing a spectacle lens, said spectacle lens comprising an anti-reflective coating, said anti-reflective coating as defined in ISO 13666:2019(E), entry 3.18.3, the method being **characterized in** the step of

- treating a layer of aluminium on a surface of said spectacle lens with water of a temperature selected from one of the following ranges

◦ a range of from 60°C to below the boiling temperature of water
◦ a range of from 65°C to 90°C,
◦ a range of from 70°C to 85°C,
◦ a range of from 75°C to 80°C,

to result in said anti-reflective coating.

11. Method according to claim 10, **characterized in** one of the following steps:

a) selecting a minimum thickness of said layer of aluminium on said surface of said spectacle lens such that a spectral transmittance of said spectacle lens at an angle of incidence of 0°in a wavelength interval of from a wavelength $\lambda_1 = 380$ nm to a wavelength $\lambda_2 = 1300$ nm is at maximum one of the following:

- said spectral transmittance in said wavelength interval being at maximum 3.3%,
- said spectral transmittance in said wavelength interval being at maximum 0.9%,
- said spectral transmittance in said wavelength interval being at maximum 0.28%,
- said spectral transmittance in said wavelength interval being at maximum 0.10%,
- said spectral transmittance in said wavelength interval being at maximum 0.03%,
- said spectral transmittance in said wavelength interval being at maximum 0.01%,
or

b) selecting each of a minimum thickness of said layer of aluminium on said surface of said spectacle lens and a minimum thickness of a further layer of aluminium on an opposite surface to said surface of said spectacle lens such that a spectral transmittance of said spectacle lens at an angle of incidence of 0° in a wavelength interval of from a wavelength $\lambda_1 = 380$ nm to a wavelength $\lambda_2 = 1300$ nm is at maximum one of the following:

- said spectral transmittance in said wavelength interval being at maximum 0.3%,
- said spectral transmittance in said wavelength interval being at maximum 0.025%,
- said spectral transmittance in said wavelength interval being at maximum 0.0029%,
- said spectral transmittance in said wavelength interval being at maximum 0.0003%,

- said spectral transmittance in said wavelength interval being at maximum 0.00005%,
- said spectral transmittance in said wavelength interval being at maximum 0.000003%.

12. Method according to any one of the preceding claims 10 and 11, **characterized in** one of the following steps:

a) selecting a maximum thickness of said layer of aluminium on said surface of said spectacle lens such that, after treating said layer of aluminium on said surface of said spectacle lens with water of said temperature, at the angle of incidence of 0°, the spectral transmittance of said spectacle lens is >90%, in the wavelength range of from the cut-off wavelength $\lambda_c$ of the spectacle lens to a minimum wavelength at which the spectral transmittance of said spectacle lens without any coating is $\leq$ 86% and,
or
b) selecting each of a maximum thickness of said layer of aluminium on said surface of said spectacle lens and a maximum thickness of said further layer of aluminium on said opposite surface to said surface of said spectacle lens such that, after treating said layer of aluminium on said surface of said spectacle lens with water of said temperature, at the angle of incidence of 0°, the spectral transmittance of said spectacle lens is >94%, in the wavelength range of from the cut-off wavelength $\lambda_c$ of the spectacle lens to a minimum wavelength at which the spectral transmittance of said spectacle lens without any coating is $\leq$ 86%.

13. Method according to any one of the preceding claims 10 to 12, **characterized in that** a spectral reflectance of said spectacle lens is <1.5% at an angle of incidence of 0° in a wavelength interval of from a wavelength $\lambda_1$ to a wavelength $\lambda_2$, said spectral reflectance as defined in ISO 13666:2019(E), entry 3.17.15, said wavelength interval of from said wavelength $\lambda_1$ to said wavelength $\lambda_2$, with 380 nm $\leq \lambda_1, \lambda_2 \leq$ 2500 nm, $\lambda_1 \neq \lambda_2, \lambda_2 > \lambda_1$, extends over one of the following widths w, w = $\lambda_2 - \lambda_1$,

- a width of 1200 nm,
- a width of 1300 nm,
- a width of 1400 nm.

14. Method according to any one of the preceding claims 10 to 13, **characterized in that** said spectacle lens has

- an average spectral reflectance of smaller than or equal to 20% in said wavelength interval of from the wavelength $\lambda_1$ = 380 nm to the wavelength $\lambda_2$ = 1200 nm and for unpolarized light at the angle of incidence of 75°,
- an average spectral reflectance of smaller than or equal to 21% in said wavelength interval of from the wavelength $\lambda_1$ = 380 nm to the wavelength $\lambda_2$ = 1400 nm and for unpolarized light at the angle of incidence of 75°,
- an average spectral reflectance of smaller than or equal to 21% in said wavelength interval of from the wavelength $\lambda_1$ = 380 nm to the wavelength $\lambda_2$ = 1600 nm and for unpolarized light at the angle of incidence of 75°.

15. Method according to any one of the preceding claims 10 to 14, **characterized in that** said spectacle lens has

- a two-dimensional average of an absolute value of polarization splitting of smaller than or equal to 4.0 percentage points in the wavelength interval of from the wavelength $\lambda_1$ = 380 nm to the wavelength $\lambda_2$ = 1200 nm and in the interval of angles of incidence of from 30° to 60°,
- a two-dimensional average of an absolute value of polarization splitting of smaller than or equal to 6.0 percentage points in the wavelength interval of from the wavelength $\lambda_1$ = 380 nm to the wavelength $\lambda_2$ = 1400 nm and in the interval of angles of incidence of from 30° to 60°,
- a two-dimensional average of an absolute value of polarization splitting of smaller than or equal to 6.0 percentage points in the wavelength interval of from the wavelength $\lambda_1$ = 380 nm to the wavelength $\lambda_2$ = 1600 nm and in the interval of angles of incidence of from 30° to 60°.

Figure 1

Figure 2

Figure 3

Figure 4

Figure 5

Figure 6

Figure 7

| | Europäisches Patentamt European Patent Office Office européen des brevets | **EUROPEAN SEARCH REPORT** | **Application Number** EP 25 15 4421 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/216807 A1 (WAKEFIELD GARETH [GB] ET AL) 22 August 2013 (2013-08-22) * paragraph [0001]; figure 3 * ----- | 1-9 | INV. G02B1/113 G02C7/02 G02C7/10 G02B1/118 |
| X | RAY NATHAN J. ET AL: "All-Glass Metasurfaces for Ultra-Broadband and Large Acceptance Angle Antireflectivity: from Ultraviolet to Mid-Infrared", ADVANCED OPTICAL MATERIALS, vol. 11, no. 12, 3 April 2023 (2023-04-03) , XP093270376, DE ISSN: 2195-1071, DOI: 10.1002/adom.202300137 Retrieved from the Internet: URL:https://advanced.onlinelibrary.wiley.c om/doi/pdfdirect/10.1002/adom.202300137> | 1-6,9 | |
| Y | * figures 1b,2c,2d * ----- | 7,8 | |
| X | US 2012/314294 A1 (NAKAYAMA TOMONARI [JP]) 13 December 2012 (2012-12-13) | 10,14,15 | |
| Y | * paragraphs [0133], [0204]; figure 5 * ----- | 7,8, 11-13 | TECHNICAL FIELDS SEARCHED (IPC) G02B G02C |
| X | US 2013/260096 A1 (SHIKI MIKA [JP] ET AL) 3 October 2013 (2013-10-03) * paragraphs [0013], [0064] - [0067] * ----- | 10 | |
| X | JP 2016 071230 A (FUJIFILM CORP) 9 May 2016 (2016-05-09) * paragraph [0034] * ----- | 10 | |
| Y | US 2017/315269 A1 (OGANE MASANOBU [JP]) 2 November 2017 (2017-11-02) | 11-13 | |
| A | * paragraphs [0028], [0029]; figures 1,5; example 2 * ----- -/-- | 1-9 | |

The present search report has been drawn up for all claims

| Place of search | Date of completion of the search | Examiner |
|---|---|---|
| Munich | 23 July 2025 | Mollenhauer, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 15 4421

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/219819 A1 (SONODA SHINICHIRO [JP] ET AL) 3 August 2017 (2017-08-03) * paragraphs [0017], [0135], [0141]; figure 1 * | 10-15 | |
| A | DOUGLAS S. HOBBS, BRUCE D. MACLEOD, AND JUANITA R. RICCOBONO: "Update on the development of high performance anti-reflecting surface relief micro-structures", SPIE, PO BOX 10 BELLINGHAM WA 98227-0010 USA, vol. 6545, 2 May 2007 (2007-05-02), pages 1-13, XP040239703, DOI: https://doi.org/10.1117/12.720672 * the whole document * | 1-9 | |
| A | US 2014/322502 A1 (KOYAMA MASANORI [JP] ET AL) 30 October 2014 (2014-10-30) * figures 4-7 * | 1-9 | |
| A | US 2011/051246 A1 (SCHULZ ULRIKE [DE] ET AL) 3 March 2011 (2011-03-03) * paragraph [0060]; figure 7 * | 1-9 | TECHNICAL FIELDS SEARCHED (IPC) |
| A | HOBBS D S ET AL: "Design, fabrication, and measured performance of anti-reflecting surface textures in infrared transmitting materials", 20050328, vol. 5786, no. 1, 28 March 2005 (2005-03-28), pages 349-364, XP002442432, DOI: 10.1117/12.604532 * figures * | 1-9 | |
| A | US 2012/176681 A1 (CHANG CHIH-HUNG [US] ET AL) 12 July 2012 (2012-07-12) * figures * | 1-9 | |

The present search report has been drawn up for all claims

| Place of search | Date of completion of the search | Examiner |
|---|---|---|
| Munich | 23 July 2025 | Mollenhauer, Ralf |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 2 of 2

EP 4 782 889 A1

Europäisches
Patentamt
European
Patent Office
Office européen
des brevets

**Application Number**

**EP 25 15 4421**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

    see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

33

Europäisches
Patentamt

European
Patent Office

Office européen
des brevets

**LACK OF UNITY OF INVENTION**
**SHEET B**

**Application Number**

**EP 25 15 4421**

The Search Division considers that the present European patent application does not comply with the requirements of unity of invention and relates to several inventions or groups of inventions, namely:

    1. claims: 1-9

        Spectacle lens with wideband anti-reflective coating
                    ---


    2. claims: 10-15

        Manufacturing method of a spectacle lens with
        anti-reflective coating at low temperatures.
                    ---

## ANNEX TO THE EUROPEAN SEARCH REPORT
## ON EUROPEAN PATENT APPLICATION NO.

EP 25 15 4421

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2025

| Patent document cited in search report | | | Publication date | Patent family member(s) | | Publication date |
|---|---|---|---|---|---|---|
| US 2013216807 | A1 | | 22-08-2013 | BR | 112013003460 A2 | 24-09-2019 |
| | | | | CN | 103097918 A | 08-05-2013 |
| | | | | EP | 2606388 A1 | 26-06-2013 |
| | | | | JP | 2013539550 A | 24-10-2013 |
| | | | | KR | 20130092565 A | 20-08-2013 |
| | | | | RU | 2013112006 A | 27-09-2014 |
| | | | | US | 2013216807 A1 | 22-08-2013 |
| | | | | WO | 2012022983 A1 | 23-02-2012 |
| US 2012314294 | A1 | | 13-12-2012 | CN | 102782012 A | 14-11-2012 |
| | | | | EP | 2534192 A1 | 19-12-2012 |
| | | | | JP | 4991943 B2 | 08-08-2012 |
| | | | | JP | 2012008524 A | 12-01-2012 |
| | | | | US | 2012314294 A1 | 13-12-2012 |
| | | | | US | 2015240031 A1 | 27-08-2015 |
| | | | | WO | 2011105614 A1 | 01-09-2011 |
| US 2013260096 | A1 | | 03-10-2013 | CN | 103364848 A | 23-10-2013 |
| | | | | EP | 2645136 A1 | 02-10-2013 |
| | | | | JP | 6207199 B2 | 04-10-2017 |
| | | | | JP | 2013228728 A | 07-11-2013 |
| | | | | US | 2013260096 A1 | 03-10-2013 |
| JP 2016071230 | A | | 09-05-2016 | JP | 6338503 B2 | 06-06-2018 |
| | | | | JP | 2016071230 A | 09-05-2016 |
| US 2017315269 | A1 | | 02-11-2017 | JP | 6758901 B2 | 23-09-2020 |
| | | | | JP | 2017201338 A | 09-11-2017 |
| | | | | US | 2017315269 A1 | 02-11-2017 |
| US 2017219819 | A1 | | 03-08-2017 | DE | 112015004709 T5 | 06-07-2017 |
| | | | | JP | 6505736 B2 | 24-04-2019 |
| | | | | JP | WO2016060003 A1 | 13-07-2017 |
| | | | | US | 2017219819 A1 | 03-08-2017 |
| | | | | WO | 2016060003 A1 | 21-04-2016 |
| US 2014322502 | A1 | | 30-10-2014 | CN | 104040380 A | 10-09-2014 |
| | | | | EP | 2857871 A1 | 08-04-2015 |
| | | | | JP | 6202785 B2 | 27-09-2017 |
| | | | | JP | 2013250295 A | 12-12-2013 |
| | | | | US | 2014322502 A1 | 30-10-2014 |
| | | | | WO | 2013179914 A1 | 05-12-2013 |
| US 2011051246 | A1 | | 03-03-2011 | DE | 102008018866 A1 | 22-10-2009 |
| | | | | EP | 2274641 A1 | 19-01-2011 |
| | | | | US | 2011051246 A1 | 03-03-2011 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 15 4421

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2025

| Patent document cited in search report | Publication date | Patent family member(s) | Publication date |
|---|---|---|---|
| | | WO 2009127581 A1 | 22-10-2009 |
| US 2012176681 A1 | 12-07-2012 | NONE | |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11714212 B2

- US 11714212 B1

**Non-patent literature cited in the description**

- **M. K. OMRANI et al.** Wide-angle broadband antireflection coatings based on boomerang-like alumina nanostructures in visible region. *Scientific Reports*, 2022, vol. 12, 904, https://www.nature.com/articles/s41598-022-04928-2
- **H A MACLEOD**. Thin-Film Optical Filters. Institute of Physics Publishing Bristol and Philadelphia
- **A. V. TIKHONRAVOV et al.** Estimation of the average residual reflectance of broadband antireflection coatings. *APPLIED OPTICS*, 01 May 2008, vol. 47 (13)

- **FRÉDÉRIC LEMARQUIS et al.** Broadband antireflection coatings for visible and infrared ranges. *CEAS Space Journal*, 2019, vol. 11 (4), 567-578
- **X.-L. ZHOU et al.** Theoretical foundation of X-ray and neutron reflectometry. *Physics Reports*, 1995, vol. 257, 223-348
- **FRÉDÉRIC LEMARQUIS et al.** Broadband antireflection coatings for visible and infrared ranges.. *CEAS Space Journal*, 2019, vol. 11 (4), 567-578